# EUROPEAN PATENT APPLICATION

(11) **EP 4 770 164 A1**
(43) Date of publication of application: **01.07.2026**
(21) Application number: 25762884.2
(22) Date of filing: 27.08.2025
(51) Int. Cl.: H04W 16/10, H04W 72/02, H04W 76/14, H04W 8/00, H04W 84/12, H04W 84/20, H04W 48/16

(54) **ELECTRONIC DEVICE FOR WIRELESS LAN COMMUNICATION AND OPERATING METHOD THEREOFF**

(30) Priority: 14.10.2024 KR 20240139821; 28.11.2024 KR 20240173574
(71) Applicant: Samsung Electronics Co., Ltd, Suwon-si, Gyeonggi-do 16677 (KR)
(72) Inventor: JUNG, Buseop, Suwon-si, Gyeonggi-do 16677 (KP); LEE, Sunkee, Suwon-si, Gyeonggi-do 16677 (KP)
(74) Representative: Gulde & Partner
(86) International application number: PCT/KR2025/013036
(87) International publication number: WO 2026/084236

(57) **Abstract**

An embodiment of the present disclosure relates to a device and method for performing wireless LAN communication in an electronic device. The electronic device includes communication circuitry, at least one processor, and memory, in which, when executed by the at least one processor, the memory may store instructions that cause the electronic device to identify information relating to a DFS function of an external electronic device from a response message received from the external electronic device, when the information relating to the identified DFS function includes information indicating that the external electronic device is connected to a DFS owner AP, transmit a message including information causing the external electronic device to operate as a group owner for controlling a direct connection between the electronic device and the external electronic device via a wireless LAN. Other embodiments may be possible.

## Description

### [Technical Field]

Embodiments of the present disclosure relate to an electronic device for wireless LAN communication and an operating method thereof.

### [Background Art]

A wireless local area network (WLAN) system may support wireless connections of various electronic devices, such as a smartphone, a tablet personal computer (PC), or a notebook, using a designated frequency band (e.g., about 2.4 GHz band, about 5 GHz band, and/or about 6 GHz band).

The WLAN system may be installed not only in private spaces, such as home, but also in public spaces, such as an airport, a train station, an office, or a department store. The WLAN system may be defined in the Institute of Electrical and Electronics Engineers (IEEE) 802.11 standard. For example, the IEEE 802.11 standard is continuously evolving, such as IEEE 802.11b, IEEE 802.11a, IEEE 802.11g, IEEE 802.11n, IEEE 802.11ac, IEEE 802.11ax, and IEEE 802.11be.

The above-described information may be provided as the related art for the purpose of helping to understand the present disclosure. No assertion or determination is made as to whether any of the foregoing is applicable as the prior art relating to the present disclosure.

### [Disclosure of Invention]

### [Technical Problem]

An electronic device and an external electronic device connected to each other through direct communication (e.g., Wi-Fi direct) via wireless LAN communication may use a dynamic frequency selection (DFS) channel for the direct communication via the wireless LAN communication under a designated DFS condition. For example, when the external electronic device is not connected to the DFS owner AP but is located within a service area of a DFS owner access point (DFS AP), the electronic device connected to the DFS AP may operate as a group owner (e.g., GO) and use the DFS channel for the direct communication via the wireless LAN communication with the external electronic device.

When the external electronic device performs a direct communication connection with the electronic device via the wireless LAN communication at the request of the external electronic device for data transmission to the electronic device, the external electronic device may operate (or be set) as the group owner based on a designated group owner setup method (e.g., an autonomous GO method). When a group owner intent (e.g., GO intent) is higher than that of the electronic device connected through direct communication via the wireless LAN communication, the external electronic device may operate (or be set) as the group owner based on the designated group owner setup method.

When the external electronic device is selected as the group owner based on the designated group owner setup method but the electronic device is connected to the DFS owner AP, the external electronic device may select a channel other than the DFS channel as a channel for the direct communication via the wireless LAN communication with the electronic device when the designated DFS condition is not satisfied. In this case, the electronic device may experience a multi-channel concurrency (MCC) situation caused by the direct communication via the wireless LAN communication with the DFS owner AP using the DFS channel and the wireless LAN communication with the external electronic device using channels different from the DFS channel, resulting in performance degradation of the wireless LAN communication.

The embodiments of the present disclosure disclose a device and method for using a DFS channel for direct communication via wireless LAN communication in an electronic device.

The technical problems of the present disclosure are not limited to the above-described technical problems. That is, other technical problems that are not described may be obviously understood by those skilled in the art to which the present disclosure pertains from the following description.

According to an embodiment, an electronic device may include communication circuitry supporting wireless LAN communication, at least one processor including processing circuitry, and a memory storing instructions. According to an embodiment, the instructions, when executed by the at least one processor individually or collectively, may include instructions that cause the electronic device to transmit a search request message. According to an embodiment, the instructions, when executed by the at least one processor individually or collectively, may include instructions that cause the electronic device to receive a response message from an external electronic device. According to an embodiment, the instructions, when executed by the at least one processor individually or collectively, may include instructions that cause the electronic device to identify first information relating to a dynamic frequency selection (DFS) function of the external electronic device from the response message. According to an embodiment, the instructions, when executed by the at least one processor individually or collectively, may include instructions that, when the first information relating to the DFS function of the external electronic device includes information indicating that the external electronic device is connected to a DFS owner AP, cause the electronic device to transmit, to the external electronic device, a message including information to cause the external electronic device to operate as a group owner for controlling a direct connection via a wireless LAN between the electronic device and the external electronic device.

According to an embodiment, an operating method of an electronic device may include transmitting a search request message. According to an embodiment, the operating method of an electronic device may include receiving a response message from an external electronic device. According to an embodiment, the operating method of an electronic device may include identifying first information relating to a dynamic frequency selection (DFS) function of the external electronic device from the response message. According to an embodiment, the operating method of an electronic device may include, when the first information relating to the DFS function of the external electronic device includes information indicating that the external electronic device is connected to a DFS owner AP, transmitting, to the external electronic device, a message including information to cause the external electronic device to operate as a group owner for controlling a direct connection via a wireless LAN between the electronic device and the external electronic device.

According to an embodiment, a non-transitory computer-readable storage medium (or a computer program product) storing one or more programs may be described. According to an embodiment, the one or more programs may include instructions that, when executed by at least one processor of an electronic device, cause the electronic device to perform the following operations: transmitting a search request message; receiving a response message from an external electronic device; identifying first information relating to a DFS (dynamic frequency selection) function of the external electronic device from the response message; and, when the first information relating to the DFS function of the external electronic device includes information indicating that the external electronic device is connected to a DFS owner AP, transmitting, to the external electronic device, a message including information causing the external electronic device to operate as a group owner for controlling a direct connection via a wireless LAN between the electronic device and the external electronic device.

According to an exemplary embodiment of the present disclosure, when an electronic device is connected to an external electronic device for direct communication via the wireless LAN communication, the electronic device or the external electronic device may be set as the group owner of the direct communication via the wireless LAN communication based on the connection information between the electronic device and the DFS owner AP and the connection information between the DFS owner AP and the external electronic device, thereby using the DFS channel for the direct communication via the wireless LAN communication.

In addition, various effects that can be directly or indirectly identified through this document may be provided. According to the embodiments of the present disclosure, when an electronic device is connected to an external electronic device for direct communication via the wireless LAN communication, the electronic device may be set as the group owner of the direct communication via the wireless LAN communication based on the connection information between the electronic device and the DFS owner AP and the connection information between the DFS owner AP and the external electronic device, thereby using the DFS channel for the direct communication via the wireless LAN communication. In particular, an electronic device and an external electronic device connected to each other through direct communication (e.g., Wi-Fi direct) via wireless LAN communication may use a dynamic frequency selection (DFS) channel for the direct communication via the wireless LAN communication under a designated DFS condition. For example, when the external electronic device is not connected to the DFS owner AP but is located within a service area of a DFS owner access point (DFS AP), the electronic device connected to the DFS AP may operate as a group owner (e.g., GO) and use the DFS channel for the direct communication via the wireless LAN communication with the external electronic device. According to the embodiments of the present disclosure, the electronic device intelligently determines the Group Owner (GO) for Wi-Fi Direct communication based on dynamic frequency selection (DFS) channel availability and access point association status. This enables the use of DFS channels even in scenarios where one or both devices are not explicitly connected to a DFS access point but are located within its service area. As a result, the system significantly reduces performance degradation caused by multi-channel concurrency (MCC), minimizes unnecessary channel switching, and enhances overall throughput and stability of direct wireless communication. Furthermore, by leveraging low-power communication protocols such as Bluetooth Low Energy (BLE) to exchange DFS-related information, the solution contributes to energy efficiency and seamless user experience without requiring manual intervention. These technical effects collectively improve wireless communication reliability and efficiency in dynamic and heterogeneous network environments.

Effects which can be achieved by the present disclosure are not limited to the above-described effects. That is, other effects that are not described may be obviously understood by those skilled in the art to which the present disclosure pertains from the following description.

### [Brief Description of Drawings]

In connection with the description of the drawings, identical or similar reference numerals may be used for identical or similar components:
FIG. 1 is a block diagram of an electronic device in a network environment according to embodiments;
FIG. 2 is a block diagram of an electronic device for wireless LAN communication according to an embodiment;
FIG. 3 is a flowchart for setting a group owner for direct communication via wireless LAN communication in the electronic device according to an embodiment;
FIG. 4 is a flowchart for setting the group owner based on information relating to a DFS function in the electronic device according to an embodiment;
FIG. 5 is a flowchart for performing a direct communication connection via wireless LAN communication with an external electronic device in the electronic device according to an embodiment;
FIG. 6 is a flowchart for performing the direct communication connection via wireless LAN communication with the electronic device in the external electronic device according to an embodiment;
FIG. 7 is an example for performing the direct communication connection via the wireless LAN communication with the external electronic device in the electronic device according to an embodiment;
FIG. 8 is a flowchart for setting the group owner for the direct communication via the wireless LAN communication in the electronic device according to an embodiment;
FIG. 9 is a flowchart for transmitting a group owner intent in the electronic device according to an embodiment;
FIG. 10 is a flowchart for updating the group owner intent in the electronic device according to an embodiment;
FIG. 11 is an example for setting the group owner based on the group owner intent in the electronic device according to an embodiment;
FIG. 12 is an example for setting the group owner based on the group owner intent in the electronic device according to an embodiment; and
FIG. 13 is a flowchart for generating a persistent group based on the information relating to the DFS function in the electronic device according to an embodiment.

### [Mode for the Invention]

Hereinafter, embodiments will be described in detail with reference to the accompanying drawings.

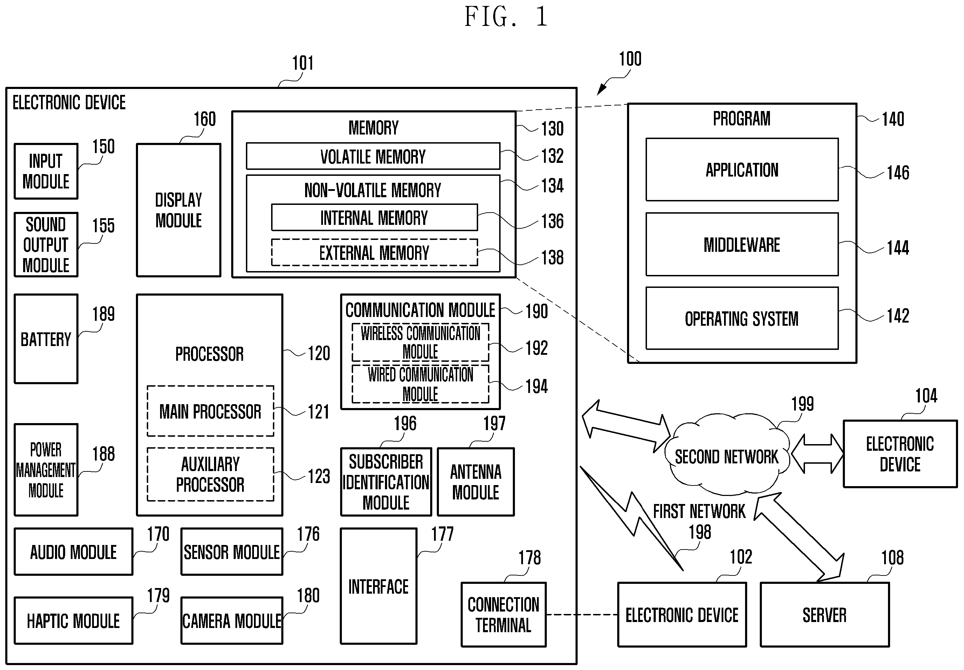

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. According to one embodiment, the subscriber identification module 196 may include a plurality of subscriber identification modules. For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include patch array antennas and/or dipole array antennas.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

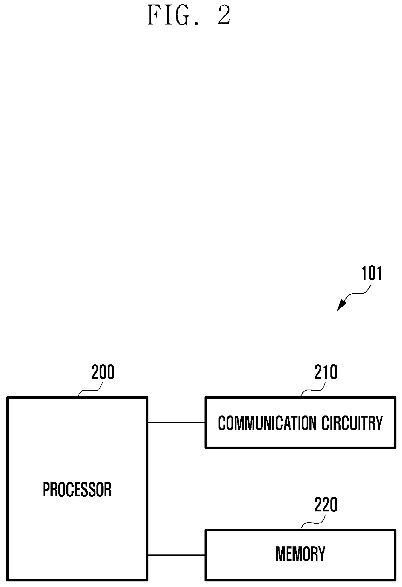

FIG. 2 is a block diagram of an electronic device for wireless LAN communication according to an embodiment. According to an embodiment, the electronic device 101 of FIG. 2 may be at least partially similar to the electronic device 101 of FIG. 1, or may include another embodiment of the electronic device.

According to an embodiment referring to FIG. 2, the electronic device 101 may include a processor 200, communication circuitry 210, and/or memory 220. For example, the processor 200 may be substantially the same as the processor 120 (e.g., an application processor and/or a communication processor) of FIG. 1, or may be included in the processor 120. The communication circuitry 210 may be substantially the same as the wireless communication module 192 of FIG. 1, or may be included in the wireless communication module 192. The memory 220 may be substantially the same as the memory 130 of FIG. 1, or may be included in the memory 130. For example, the processor 200 may be operatively, functionally, and/or electrically connected to the communication circuitry 210 and/or the memory 220. For example, the processor 200 may include at least one processor including processing circuitry.

According to an embodiment, the processor 200 may control the communication circuitry 210 to transmit a search request message when an event relating to direct communication via wireless LAN communication is detected. For example, the search request message may include information relating to a dynamic frequency selection (DFS) function of the electronic device 101. For example, the information relating to the DFS function may include at least one of support information (or information on whether the DFS function is supported) for the DFS of the electronic device 101 or information relating to a DFS owner access point (AP) (or DFS AP) connected to the electronic device 101. For example, when the electronic device 101 accesses (or is connected to) the DFS owner AP, the information relating to the DFS owner AP connected to the electronic device 101 may include at least one of identification information (e.g., a service set identifier (SSID) or a basic service set identifier (BSSID)) for the DFS owner AP which the electronic device 101 accesses (or is connected to) or channel information for the wireless LAN communication with the DFS owner AP. For example, the DFS owner AP may indicate an AP that may use (or allocate) a DFS channel. For example, the search request message may include a message (e.g., a BLE advertisement message) of out of band (OOB) communication. For example, an event relating to direct communication via the wireless LAN communication may be detected based on at least one of execution of an application or function relating to the direct communication via the wireless LAN communication, reception of a user input (e.g., a touch input or a gesture input) relating to the direct communication via the wireless LAN communication, or reception of a control signal relating to the direct communication via the wireless LAN communication.

According to an embodiment, the processor 200 may receive a search response message corresponding to the search request message through the communication circuitry 210. For example, when the processor 200 receives the search response message from at least one external electronic device, the processor 200 may output a list of external electronic devices corresponding to the search response message through an output device (e.g., a display) of the electronic device 101. The processor 200 may identify (or select) an external electronic device for performing the direct communication via the wireless LAN communication based on an input corresponding to the list of external electronic devices. For example, the search response message may include information relating to a DFS function of the external electronic device. For example, the information relating to the DFS function may include at least one of the support information (or information on whether the DFS function is supported) for the DFS of the external electronic device, the information relating to the DFS owner AP connected to the external electronic device, or information indicating that the external electronic device is located in a service area of the DFS owner AP connected to the electronic device 101. For example, when the external electronic device accesses (or is connected to) the DFS owner AP, the information relating to the DFS owner AP connected to the external electronic device may include at least one of the identification information (e.g., SSID or BSSID) for the DFS owner AP which the external electronic device accesses (or is connected to) or the channel information for the wireless LAN communication with the DFS owner AP. For example, the search response message may include a message of the OOB communication (e.g., the BLE advertisement message). For example, the information indicating that the external electronic device is located in the service area of the DFS owner AP connected to the electronic device 101 may include a state in which the external electronic device may receive (or detect) a signal (e.g., the beacon signal) of the DFS owner AP connected to the electronic device 101. For example, the external electronic device may or may not be connected to the DFS owner AP within the service area of the DFS owner AP connected to the electronic device 101.

According to an embodiment, the processor 200 may set a group owner of the direct communication via the wireless LAN communication based on the information relating to the DFS function of the electronic device 101 and the information relating to the DFS function of the external electronic device. For example, the processor 200 may determine whether a designated DFS usage condition is satisfied based on the information relating to the DFS function of the electronic device 101 and the information relating to the DFS function of the external electronic device. For example, the state in which the designated DFS usage condition is satisfied may include a state in which the electronic device 101 and the external electronic device support the DFS, and at least one of the electronic device 101 or the external electronic device is connected to the DFS owner AP and is located in the service area of the DFS owner AP connected to another electronic device. For example, the state in which at least one of the electronic device 101 or the external electronic device is located in the service area of the DFS owner AP connected to another electronic device may include at least one of a state in which the electronic device 101 may receive (or detect) the signal (e.g., the beacon signal) of the DFS owner AP connected to the external electronic device or a state in which the external electronic device may receive (or detect) the signal (e.g., the beacon signal) of the DFS owner AP connected to the electronic device 101. For example, the state in which at least one of the electronic device 101 or the external electronic device is located in the service area of the DFS owner AP connected to another electronic device may include at least one of a state in which the signal of the DFS owner AP is received (or detected) without being connected to the DFS owner AP connected to another electronic device or a state in which at least one of the electronic device 101 or the external electronic device is connected to the DFS owner AP connected to another electronic device. For example, the state in which the designated DFS usage condition is not satisfied may include a state in which at least one of the electronic device 101 or the external electronic device does not support the DFS, or a state in which the electronic device 101 and the external electronic device are not connected to the DFS owner AP or are not located in the service area of the DFS owner AP connected to another electronic device. For example, the state in which the electronic device 101 and the external electronic device are not located in the service area of the DFS owner AP connected to another electronic device may include the state in which the electronic device 101 may not receive (or detect) the signal (e.g., the beacon signal) of the DFS owner AP connected to the external electronic device and the state in which the external electronic device may not receive (or detect) the signal (e.g., the beacon signal) of the DFS owner AP connected to the electronic device 101.

For example, when determining that the designated DFS usage condition is not satisfied, the processor 200 may set the electronic device 101 as the group owner based on a designated first group owner setup method (e.g., an autonomous GO method). For example, the designated first group owner setup method may include a group owner setup method that sets, as the group owner, a device that has requested the direct communication connection via the wireless LAN communication. For example, the device that has requested the direct communication connection via the wireless LAN communication may include a device that has transmitted the search request message.

For example, when determining that the designated DFS usage condition is satisfied, the processor 200 may set the group owner based on the information relating to the DFS function of the electronic device 101 and the information relating to the DFS function of the external electronic device. For example, when the electronic device 101 that has requested the direct communication connection via the wireless LAN communication is connected to the DFS owner AP and the external electronic device is located in the service area of the DFS owner AP connected to the electronic device 101, the processor 200 may set the electronic device 101 as the group owner regardless of whether the external electronic device is connected to the DFS owner AP. For example, the processor 200 may set the external electronic device as the group owner when the external electronic device is connected to the DFS owner AP, the electronic device 101 is not connected to the DFS owner AP, and the electronic device 101 is located in the service area of the DFS owner AP connected to the external electronic device.

According to an embodiment, the processor 200 may set a channel for the direct communication via the wireless LAN communication with the external electronic device when the electronic device 101 is set as the group owner. For example, the processor 200 may set the DFS channel as the channel for the direct communication via the wireless LAN communication with the external electronic device when the electronic device 101 performs the wireless LAN communication with the DFS owner AP using the DFS channel. For example, the processor 200 may select the channel for the direct communication via the wireless LAN communication with the external electronic device from among the channels supported by the electronic device 101 when the designated DFS usage condition is not satisfied.

For example, the processor 200 may control the communication circuitry 210 to perform the direct communication connection via the wireless LAN communication with the external electronic device based on the channel (e.g., the DFS channel) for the direct communication via the wireless LAN communication with the external electronic device.

According to an embodiment, when setting the external electronic device as the group owner while the designated DFS usage condition is satisfied, the processor 200 may control the communication circuitry 210 to transmit information relating to the setting of the group owner to the external electronic device. For example, the information relating to the setting of the group owner may include at least one of group owner setup information of the external electronic device, a preferred channel of the electronic device 101, or the information indicating that the electronic device 101 is located in the service area of the DFS owner AP connected to the external electronic device. For example, the group owner setup information of the external electronic device is information for setting, as the group owner, the external electronic device, which has received a request for the direct communication connection via the wireless LAN communication, unlike the designated first group owner setup method, and may be referred to as update information of the designated first group owner setup method. For example, the information indicating that the electronic device 101 is located in the service area of the DFS owner AP connected to the external electronic device may include the state in which the electronic device 101 may receive (or detect) the signal (e.g., the beacon signal) of the DFS owner AP connected to the external electronic device. For example, the electronic device 101 may or may not be connected to the DFS owner AP within the service area of the DFS owner AP connected to the external electronic device.

For example, the processor 200 may control the communication circuitry 210 to perform the direct communication connection via the wireless LAN communication with the external electronic device based on the channel (e.g., the DFS channel) allocated by the external electronic device set as the group owner.

According to an embodiment, when the processor 200 receives the search request message via the wireless LAN communication, the processor 200 may control the communication circuitry 210 to transmit the search response message corresponding to the search request message. For example, the search request message may include a probe request message or a service discovery frame (SDF) that is related to the search request. For example, the search response message may include a probe response message or the SDF relating to the search response. For example, the search response message is the information relating to the dynamic frequency selection (DFS) function of the electronic device 101, and may include at least one of the support information (or information on whether the DFS function is supported) for the DFS of the electronic device 101, or the information relating to the DFS owner AP connected to the electronic device 101.

According to an embodiment, when a group owner negotiation request message is received, the processor 200 may identify the information relating to the DFS function of the external electronic device and a group owner intent of the external electronic device from the group owner negotiation request message. For example, the information relating to the DFS function of the external electronic device may include at least one of the support information (or information on whether the DFS function is supported) for the DFS of the external electronic device, the information relating to the DFS owner AP connected to the external electronic device, or the information indicating that the external electronic device is located in the service area of the DFS owner AP connected to the electronic device 101. For example, the group owner intent is a value indicating the degree to which the external electronic device prefers the group owner, and may be set based on a user input or characteristics of the external electronic device. For example, the information indicating that the external electronic device is located in the service area of the DFS owner AP connected to the electronic device 101 may include the state in which the external electronic device may receive (or detect) the signal (e.g., the beacon signal) of the DFS owner AP connected to the electronic device 101. For example, the external electronic device may or may not be connected to the DFS owner AP within the service area of the DFS owner AP connected to the electronic device 101.

According to an embodiment, the processor 200 may determine whether a designated DFS usage condition is satisfied based on the information relating to the DFS function of the electronic device 101 and the information relating to the DFS function of the external electronic device. For example, the state in which the designated DFS usage condition is satisfied may include the state in which the electronic device 101 and the external electronic device support the DFS, and at least one of the electronic device 101 or the external electronic device is connected to the DFS owner AP and is located in the service area of the DFS owner AP connected to another electronic device. For example, the state in which at least one of the electronic device 101 or the external electronic device is located in the service area of the DFS owner AP connected to another electronic device may include at least one of the state in which the electronic device 101 may receive (or detect) the signal (e.g., the beacon signal) of the DFS owner AP connected to the external electronic device or the state in which the external electronic device may receive (or detect) the signal (e.g., the beacon signal) of the DFS owner AP connected to the electronic device 101. For example, the state in which at least one of the electronic device 101 or the external electronic device is located in the service area of the DFS owner AP connected to another electronic device may include at least one of the state in which the signal of the DFS owner AP is received (or detected) without being connected to the DFS owner AP connected to another electronic device or the state in which at least one of the electronic device 101 or the external electronic device is connected to the DFS owner AP connected to another electronic device. For example, the state in which the designated DFS usage condition is not satisfied may include the state in which at least one of the electronic device 101 or the external electronic device does not support the DFS, or the state in which the electronic device 101 and the external electronic device are not connected to the DFS owner AP or are not located in the service area of the DFS owner AP connected to another electronic device. For example, the state in which the electronic device 101 and the external electronic device are not located in the service area of the DFS owner AP connected to another electronic device may include the state in which the electronic device 101 may not receive (or detect) the signal (e.g., the beacon signal) of the DFS owner AP connected to the external electronic device and the state in which the external electronic device may not receive (or detect) the signal (e.g., the beacon signal) of the DFS owner AP connected to the electronic device 101.

According to an embodiment, when determining that the designated DFS usage condition is not satisfied, the processor 200 may control the communication circuitry 210 to transmit the group owner intent of the electronic device 101 to the external electronic device. For example, the processor 200 may control the communication circuitry 210 to transmit a group owner negotiation response message including information relating to the group owner intent of the electronic device 101 and a group owner negotiation temporary suspension (e.g., GO negotiation response states 1) to the external electronic device. When the processor 200 accepts the direct connection via the wireless LAN communication with the external electronic device, the processor 200 may control the communication circuitry 210 to transmit the group owner negotiation request message including the information relating to the group owner intent of the electronic device 101 to the external electronic device. When the processor 200 receives the group owner negotiation response message from the external electronic device, the processor 200 may identify the group owner intent of the external electronic device from the group owner negotiation response message. The processor 200 may compare the group owner intent of the electronic device 101 and the group owner intent of the external electronic device to set the group owner of the direct communication via the wireless LAN communication. The processor 200 may control the communication circuitry 210 to transmit a group owner setup completion message including the group owner setup information to the external electronic device. For example, the group owner may be set to a device having the greater group owner intent among the electronic device 101 and the external electronic device for performing the direct communication via the wireless LAN communication.

For example, when the processor 200 accepts the direct connection via the wireless LAN communication with the external electronic device, the processor 200 may control the communication circuitry 210 to transmit the group owner negotiation response message including the information relating to the group owner intent of the electronic device 101 to the external electronic device. When the processor 200 receives the group owner negotiation completion message from the external electronic device, the processor 200 may identify the group owner set by the external electronic device.

According to an embodiment, when determining that the designated DFS usage condition is satisfied, the processor 200 may update the group owner intent of the electronic device 101. For example, the processor 200 may control the communication circuitry 210 to transmit the group owner negotiation response message including the information relating to the group owner intent of the electronic device 101 and the group owner negotiation temporary suspension (e.g., GO negotiation response states 1) to the external electronic device. The processor 200 may set the group owner based on the information relating to the DFS function of the electronic device 101 and the information relating to the DFS function of the external electronic device.

For example, when the processor 200 accepts the direct connection via the wireless LAN communication with the external electronic device, the processor 200 may set the group owner based on the information relating to the DFS function of the electronic device 101 and the information relating to the DFS function of the external electronic device.

For example, when the electronic device 101 that has requested the direct communication connection via the wireless LAN communication is connected to the DFS owner AP and the external electronic device is located in the service area of the DFS owner AP connected to the electronic device 101, the processor 200 may set the electronic device 101 as the group owner regardless of whether the external electronic device is connected to the DFS owner AP. For example, the state in which the external electronic device is located in the service area of the DFS owner AP connected to the electronic device 101 may include the state in which the external electronic device may receive (or detect) the signal (e.g., the beacon signal) of the DFS owner AP connected to the electronic device 101. For example, the external electronic device may or may not be connected to the DFS owner AP within the service area of the DFS owner AP connected to the electronic device 101.

For example, the processor 200 may set the external electronic device as the group owner when the external electronic device is connected to the DFS owner AP, the electronic device 101 is not connected to the DFS owner AP, and the electronic device 101 is located in the service area of the DFS owner AP connected to the external electronic device. For example, the state in which the electronic device 101 is located in the service area of the DFS owner AP connected to the external electronic device may include the state in which the electronic device 101 may receive (or detect) the signal (e.g., the beacon signal) of the DFS owner AP connected to the external electronic device. For example, the electronic device 101 may or may not be connected to the DFS owner AP within the service area of the DFS owner AP connected to the external electronic device.

For example, when the electronic device 101 is set as the group owner and the group owner intent of the electronic device 101 is smaller than the group owner intent of the external electronic device, the processor 200 may update the group owner intent of the electronic device 101 to be greater than the group owner intent of the external electronic device. For example, when the electronic device 101 is set as the group owner and the group owner intent of the electronic device 101 is greater than the group owner intent of the external electronic device, the processor 200 may maintain the group owner intent of the electronic device 101.

For example, when the external electronic device is set as the group owner and the group owner intent of the electronic device 101 is greater than the group owner intent of the external electronic device, the processor 200 may update the group owner intent of the electronic device 101 to be smaller than the group owner intent of the external electronic device. For example, when the external electronic device is set as the group owner and the group owner intent of the electronic device 101 is smaller than the group owner intent of the external electronic device, the processor 200 may maintain the group owner intent of the electronic device 101.

For example, when the processor 200 accepts the direct connection via the wireless LAN communication with the external electronic device, the processor 200 may control the communication circuitry 210 to transmit the group owner negotiation request message including the information relating to the updated group owner intent of the electronic device 101 to the external electronic device. When the processor 200 receives the group owner negotiation response message from the external electronic device, the processor 200 may identify the group owner intent of the external electronic device from the group owner negotiation response message. The processor 200 may set the group owner of the direct communication via the wireless LAN communication by using the group owner intent of the electronic device 101 and the group owner intent of the external electronic device according to a designated second group owner setup method. The processor 200 may control the communication circuitry 210 to transmit the group owner setup completion message including the group owner setup information to the external electronic device. For example, the group owner may be set as a device having the greater group owner intent among the electronic device 101 and the external electronic device for performing the direct communication via the wireless LAN communication according to the designated second group owner setup method.

For example, when the processor 200 accepts the direct connection via the wireless LAN communication with the external electronic device, the processor 200 may control the communication circuitry 210 to transmit the group owner negotiation response message including the information relating to the updated group owner intent of the electronic device 101 to the external electronic device. When the processor 200 receives the group owner negotiation completion message from the external electronic device, the processor 200 may identify the group owner set by the external electronic device.

According to an embodiment, the processor 200 may set the channel for the direct communication via the wireless LAN communication with the external electronic device when the electronic device 101 is set as the group owner. For example, the processor 200 may set the DFS channel as the channel for the direct communication via the wireless LAN communication with the external electronic device when the electronic device 101 performs the wireless LAN communication with the DFS owner AP using the DFS channel. For example, the processor 200 may select the channel for the direct communication via the wireless LAN communication with the external electronic device from among the channels supported by the electronic device 101 when the designated DFS usage condition is not satisfied.

For example, the processor 200 may control the communication circuitry 210 to perform the direct communication connection via the wireless LAN communication with the external electronic device based on the channel (e.g., the DFS channel) for the direct communication via the wireless LAN communication with the external electronic device.

According to an embodiment, when setting the external electronic device as the group owner while the designated DFS usage condition is satisfied, the processor 200 may control the communication circuitry 210 to perform the direct communication connection via the wireless LAN communication with the external electronic device based on the channel (e.g., the DFS channel) allocated by the external electronic device set as the group owner.

According to an embodiment, when the external electronic device for the direct connection via the wireless LAN communication is searched, the processor 200 may identify whether there is a persistent group relating to the external electronic device. For example, the processor 200 may identify whether there is the persistent group corresponding to the identification information of the external electronic device. For example, the persistent group may include devices (e.g., devices designated with Wi-Fi protected setup (WPS)) that store group owner information and encrypted information required for connection with the group owner to reduce connection delay of the direct communication via the wireless LAN communication between the electronic device 101 and the external electronic device.

According to an embodiment, when there is no the persistent group relating to the external electronic device, the processor 200 may set the group owner using the designated first group owner setup method or the designated second group owner setup method based on the information relating to the DFS function of the electronic device 101 and the information relating to the DFS function of the external electronic device.

According to an embodiment, when there is the persistent group relating to the external electronic device, the processor 200 may determine whether the designated DFS usage condition is satisfied based on the information relating to the DFS function of the electronic device 101 and the information relating to the DFS function of the external electronic device. For example, the processor 200 may control the communication circuitry 210 to exchange the information relating to the DFS function with the external electronic device through a search process for determining whether there is the external electronic device for the direct connection via the wireless LAN communication. For example, the processor 200 may control the communication circuitry 210 to transmit the search request message including the information relating to the DFS function of the electronic device 101. When the processor 200 receives the search response message corresponding to the search request message, the processor 200 may acquire the information relating to the DFS function of the external electronic device from the search response message. For example, when the processor 200 receives the search request message, the processor 200 may identify the information relating to the DFS function of the external electronic device from the search request message. The processor 200 may control the communication circuitry 210 to transmit the search response message including the information relating to the DFS function of the electronic device 101. For example, the information relating to the DFS function of the electronic device 101 may include at least one of the support information (or information on whether the DFS function is supported) for the DFS of the electronic device 101, the information relating to the DFS owner AP connected to the electronic device 101, or the information indicating that the electronic device 101 is located in the service area of the DFS owner AP connected to the external electronic device. One example of the information relating to the DFS function of the external electronic device may include at least one of the support information (or information on whether the DFS function is supported) for the DFS of the external electronic device, the information relating to the DFS owner AP connected to the external electronic device, or the information indicating that the external electronic device is located in the service area of the DFS owner AP connected to the electronic device 101. For example, the search request message may include the probe request message, the service discovery frame (SDF), or the message of the OOB communication that is related to the search request. For example, the search response message may include the probe response message, the SDF, or the message of the OOB communication that is related to the search response. For example, the information indicating that the external electronic device is located in the service area of the DFS owner AP connected to the electronic device 101 may include the state in which the external electronic device may receive (or detect) the signal (e.g., the beacon signal) of the DFS owner AP connected to the electronic device 101. For example, the external electronic device may or may not be connected to the DFS owner AP within the service area of the DFS owner AP connected to the electronic device 101.

For example, when the electronic device 101 and the external electronic device support the DFS, and at least one of the electronic device 101 or the external electronic device is connected to the DFS owner AP and located in the service area of the DFS owner AP connected to another electronic device, the processor 200 may determine that the designated DFS usage condition is satisfied. For example, the state in which at least one of the electronic device 101 or the external electronic device is located in the service area of the DFS owner AP connected to another electronic device may include at least one of the state in which the electronic device 101 may receive (or detect) the signal (e.g., the beacon signal) of the DFS owner AP connected to the external electronic device or the state in which the external electronic device may receive (or detect) the signal (e.g., the beacon signal) of the DFS owner AP connected to the electronic device 101. For example, the state in which at least one of the electronic device 101 or the external electronic device is located in the service area of the DFS owner AP connected to another electronic device may include at least one of the state in which the signal of the DFS owner AP is received (or detected) without being connected to the DFS owner AP connected to another electronic device or the state in which at least one of the electronic device 101 or the external electronic device is connected to the DFS owner AP connected to another electronic device. For example, when at least one of the electronic device 101 or the external electronic device does not support the DFS, or the electronic device 101 and the external electronic device are not connected to the DFS owner AP or are not located in the service area of the DFS owner AP connected to another electronic device, the processor 200 may determine that the designated DFS usage condition is not satisfied. For example, the state in which the electronic device 101 and the external electronic device are not located in the service area of the DFS owner AP connected to another electronic device may include the state in which the electronic device 101 may not receive (or detect) the signal (e.g., the beacon signal) of the DFS owner AP connected to the external electronic device and the state in which the external electronic device may not receive (or detect) the signal (e.g., the beacon signal) of the DFS owner AP connected to the electronic device 101.

According to an embodiment, when determining that there is the persistent group relating to the external electronic device and the designated DFS usage condition is not satisfied, the processor 200 may control the communication circuitry 210 to perform the direct communication connection via the wireless LAN communication with the external electronic device based on the persistent group relating to the external electronic device.

According to an embodiment, when determining that the designated DFS usage condition is satisfied, the processor 200 may set the group owner based on the information relating to the DFS function of the electronic device 101 and the information relating to the DFS function of the external electronic device. For example, when the electronic device 101 that has requested the direct communication connection via the wireless LAN communication is connected to the DFS owner AP and the external electronic device is located in the service area of the DFS owner AP connected to the electronic device 101, the processor 200 may set the electronic device 101 as the group owner regardless of whether the external electronic device is connected to the DFS owner AP. For example, the state in which the external electronic device is located in the service area of the DFS owner AP connected to the electronic device 101 may include the state in which the external electronic device may receive (or detect) the signal (e.g., the beacon signal) of the DFS owner AP connected to the electronic device 101. For example, the external electronic device may or may not be connected to the DFS owner AP within the service area of the DFS owner AP connected to the electronic device 101. For example, the processor 200 may set the external electronic device as the group owner when the external electronic device is connected to the DFS owner AP, the electronic device 101 is not connected to the DFS owner AP, and the electronic device 101 is located in the service area of the DFS owner AP connected to the external electronic device. For example, the state in which the electronic device 101 is located in the service area of the DFS owner AP connected to the external electronic device may include the state in which the electronic device 101 may receive (or detect) the signal (e.g., the beacon signal) of the DFS owner AP connected to the external electronic device. For example, the electronic device 101 may or may not be connected to the DFS owner AP within the service area of the DFS owner AP connected to the external electronic device.

According to an embodiment, the processor 200 may identify whether there is the persistent group corresponding to the set group owner based on the information relating to the DFS function of the electronic device 101 and the information relating to the DFS function of the external electronic device. For example, the processor 200 may identify whether there is the persistent group corresponding to the set group owner based on the information relating to the DFS function among the persistent groups relating to the external electronic device.

According to an embodiment, when there is the persistent group corresponding to the set group owner based on the information relating to the DFS function, the processor 200 may control the communication circuitry 210 to perform the direct communication connection via the wireless LAN communication with the external electronic device based on the persistent group corresponding to the set group owner based on the information relating to the DFS function.

According to an embodiment, when there is no persistent group corresponding to the set group owner based on the information relating to the DFS function, the processor 200 may additionally generate the persistent group corresponding to the set group owner based on the information relating to the DFS function. For example, the processor 200 may control the communication circuitry 210 to perform the direct communication connection via the wireless LAN communication with the external electronic device based on the newly generated persistent group.

According to an embodiment, the communication circuitry 210 may transmit and/or receive packets (e.g., signals and/or data) to and from at least one external electronic device (e.g., the electronic device 102 or the server 108 of FIG. 1) through the wireless communication. For example, the wireless communication may include the wireless LAN communication (e.g., Wi-Fi) and the out of band (OOB) communication. For example, the OOB communication may include at least one of Bluetooth, Bluetooth low energy (BLE), near field communication (NFC), or quick response (QR) as a different communication method from the wireless LAN communication.

According to an embodiment, the memory 220 may store various data used by at least one component (e.g., the processor 200 or the communication circuitry 210) of the electronic device 101. For example, the memory 220 may store various instructions that may be executed individually or collectively by the processor 200 (e.g., at least one processor).

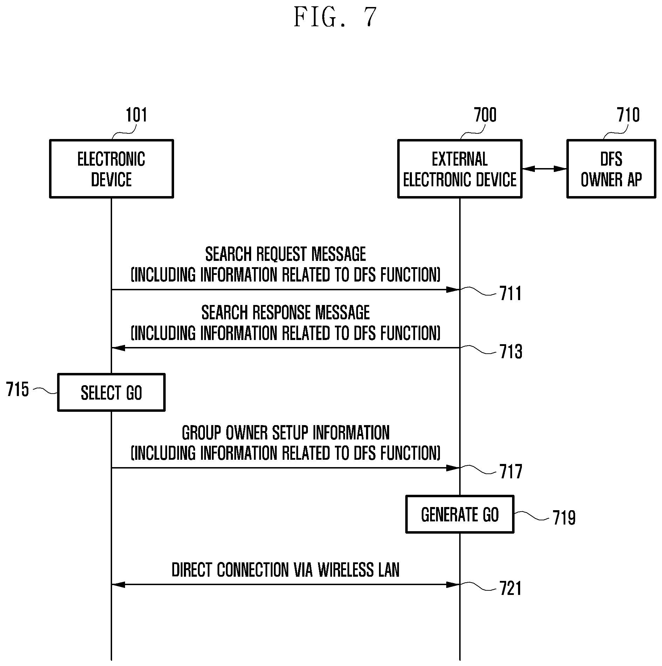

According to an embodiment, the electronic device (e.g., the electronic device 101 of FIG. 1 or 2) may include the communication circuitry supporting the wireless LAN communication (e.g., the wireless communication module 192 of FIG. 1 or the communication circuitry 210 of FIG. 2), at least one processor including the processing circuitry (e.g., the processor 120 of FIG. 1 or the processor 200 of FIG. 2), and the memory (e.g., the memory 130 of FIG. 1 or the memory 220 of FIG. 2) that stores instructions. According to an embodiment, the instructions, when executed by the at least one processor individually or collectively, may include instructions that cause the electronic device to transmit a search request message. According to an embodiment, the instructions, when executed by the at least one processor individually or collectively, may include instructions that cause the electronic device to receive a response message from an external electronic device. According to an embodiment, the instructions may include instructions that, when executed individually or collectively by at least one processor, cause the electronic device to identify the first the information relating to the DFS function of the external electronic device (e.g., the external electronic device 700 of FIG. 7) from the response message. According to an embodiment, the instructions, when executed by the at least one processor individually or collectively, may include instructions that, when the first information relating to the DFS function of the external electronic device includes information indicating that the external electronic device is connected to a DFS owner AP, cause the electronic device to transmit, to the external electronic device, the message including the information to cause the external electronic device to operate as the group owner for controlling the direct connection via the wireless LAN between the electronic device and the external electronic device.

According to an embodiment, the instructions may include instructions that, when executed individually or collectively by at least one processor, cause the electronic device to transmit the search request message including the second information relating to the DFS function of the electronic device. According to an embodiment, the second information relating to the DFS function of the electronic device may include at least one of the support information for the DFS function of the electronic device or the information relating to the DFS owner AP connected to the electronic device.

According to an embodiment, the first the information relating to the DFS function of the external electronic device may include at least one of the support information for the DFS function of the external electronic device, the information relating to the DFS owner AP connected to the external electronic device, or the information indicating that the external electronic device is located in the service area of the DFS owner AP connected to the electronic device.

According to an embodiment, the memory may store instructions that, when executed individually or collectively by at least one processor, cause the electronic device to select the electronic device as the group owner for controlling the direct connection via the wireless LAN, when it is determined that the electronic device is connected to the DFS owner AP and the external electronic device is located in the service area of the DFS owner AP based on the second information relating to the DFS function of the electronic device and first the information relating to the DFS function of the external electronic device.

According to an embodiment, the memory may store instructions that, when executed individually or collectively by at least one processor, cause the electronic device to set an operation channel for the direct connection via the wireless LAN with the external electronic device based on the electronic device selected as the group owner for controlling the direct connection via the wireless LAN. The memory may store instructions that, when executed individually or collectively by at least one processor, cause the electronic device to perform the direct connection via the wireless LAN with the external electronic device via the operation channel. According to an embodiment, the operation channel of the direct connection via the wireless LAN may be set as the DFS channel by the electronic device.

According to an embodiment, the memory may store instructions that, when executed individually or collectively by at least one processor, cause the electronic device to select the external electronic device as the group owner for controlling the direct connection via the wireless LAN, when it is determined that the external electronic device is connected to the DFS owner AP and the external electronic device is located in the service area of the DFS owner AP based on the second information relating to the DFS function of the electronic device and first the information relating to the DFS function of the external electronic device.

According to an embodiment, the memory may store instructions that, when executed individually or collectively by at least one processor, cause the electronic device to transmit, to the external electronic device, the message including the information indicating that the electronic device is located in the service area of the DFS owner AP connected to the external electronic device and the information relating to the group owner for controlling the direct connection via the wireless LAN based on the external electronic device selected as the group owner for controlling the direct connection via the wireless LAN. According to an embodiment, the operation channel of the direct connection via the wireless LAN may be set as the DFS channel by the external electronic device.

According to an embodiment, the memory may store instructions that, when executed individually or collectively by at least one processor, cause the electronic device to identify the group owner for controlling the direct connection via the wireless LAN set in the persistent group when the persistent group relating to the external electronic device is set. According to an embodiment, the memory may store instructions that, when executed individually or collectively by at least one processor, cause the electronic device to additionally generate the persistent group corresponding to the group owner for controlling the direct connection through the selected wireless LAN when the group owner for controlling the direct connection through the selected wireless LAN and the group owner for controlling the direct connection via the wireless LAN set in the persistent group are different.

According to an embodiment, the memory may store instructions that, when executed individually or collectively by at least one processor, cause the electronic device to select the group owner for controlling the direct connection via the wireless LAN based on the persistent group when the group owner for controlling the direct connection through the selected wireless LAN and the group owner for controlling the direct connection via the wireless LAN set in the persistent group are the same.

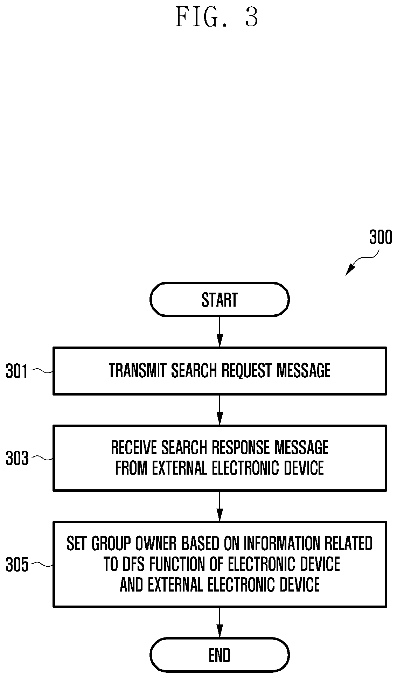

FIG. 3 is a flowchart (300) for setting the group owner for the direct communication via the wireless LAN communication in the electronic device according to an embodiment. In the following embodiments, each operation may be performed sequentially, but is not necessarily performed sequentially. For example, the order of each operation may be changed, and at least two operations may also be performed in parallel. For example, the electronic device of FIG. 3 may be the electronic device 101 of FIG. 1 or 2.

According to an embodiment referring to FIG. 3, in operation 301, the electronic device (e.g., the electronic device 101 of FIG. 1 or 2) or the processor (e.g., the processor 120 of FIG. 1 or the processor 200 of FIG. 2) may transmit the search request message to search for whether there is the device for the direct communication via the wireless LAN communication. For example, the processor 200 may control the communication circuitry 210 to transmit a search request message when an event relating to direct communication via wireless LAN communication is detected. For example, the search request message may include information relating to a dynamic frequency selection (DFS) function of the electronic device 101. For example, the information relating to the DFS function may include at least one of the support information (or information on whether the DFS function is supported) for the DFS of the electronic device 101 or the information relating to the DFS owner access point (AP) connected to the electronic device 101. For example, when the electronic device 101 accesses (or is connected to) the DFS owner AP, the information relating to the DFS owner AP connected to the electronic device 101 may include at least one of the identification information (e.g., the service set identifier (SSID) or the basic service set identifier (BSSID)) for the DFS owner AP which the electronic device 101 accesses (or is connected to) or the channel information for the wireless LAN communication with the DFS owner AP. For example, the DFS owner AP may indicate the AP that may use (or allocate) the DFS channel. For example, the search request message may include the message (e.g., the BLE advertisement message) of the out of band (OOB) communication. For example, the event relating to the direct communication via the wireless LAN communication may be detected based on at least one of the execution of the application or function relating to the direct communication via the wireless LAN communication, the reception of the user input (e.g., the touch input or the gesture input) relating to the direct communication via the wireless LAN communication, or the reception of the control signal relating to the direct communication via the wireless LAN communication.

According to an embodiment, in operation 303, the electronic device (e.g., the electronic device 101) or the processor (e.g., the processor 120 or 200) may receive the search response message corresponding to the search request message from the external electronic device. For example, when the processor 200 receives the search response message from at least one external electronic device, the processor 200 may output the list of external electronic devices corresponding to the search response message through the output device (e.g., the display) of the electronic device 101. The processor 200 may identify (or select) the external electronic device for performing the direct communication via the wireless LAN communication based on the input corresponding to the list of external electronic devices. For example, the search response message may include the information relating to the DFS function of the external electronic device. For example, the information relating to the DFS function may include at least one of the support information (or information on whether the DFS function is supported) for the DFS of the external electronic device, the information relating to the DFS owner AP connected to the external electronic device, or information indicating that the external electronic device is located in the service area of the DFS owner AP connected to the electronic device 101. For example, when the external electronic device accesses (or is connected to) the DFS owner AP, the information relating to the DFS owner AP connected to the external electronic device may include at least one of the identification information (e.g., SSID or BSSID) for the DFS owner AP which the external electronic device accesses (or is connected to) or the channel information for the wireless LAN communication with the DFS owner AP. For example, the search response message may include the message of the OOB communication (e.g., the BLE advertisement message). For example, the information indicating that the external electronic device is located in the service area of the DFS owner AP connected to the electronic device 101 may include the state in which the external electronic device may receive (or detect) the signal (e.g., the beacon signal) of the DFS owner AP connected to the electronic device 101. For example, the external electronic device may or may not be connected to the DFS owner AP within the service area of the DFS owner AP connected to the electronic device 101.

According to an embodiment, in operation 305, the electronic device (e.g., the electronic device 101) or the processor (e.g., the processor 120 or 200) may set the group owner of the direct communication via the wireless LAN communication based on the information relating to the DFS function of the electronic device 101 and the information relating to the DFS function of the external electronic device. For example, the processor 200 may determine whether the designated DFS usage condition is satisfied based on the information relating to the DFS function of the electronic device 101 and the information relating to the DFS function of the external electronic device. For example, the state in which the designated DFS usage condition is satisfied may include the state in which the electronic device 101 and the external electronic device support the DFS, and at least one of the electronic device 101 or the external electronic device is connected to the DFS owner AP and is located in the service area of the DFS owner AP connected to another electronic device. For example, the state in which at least one of the electronic device 101 or the external electronic device is located in the service area of the DFS owner AP connected to another electronic device may include at least one of the state in which the electronic device 101 may receive (or detect) the signal (e.g., the beacon signal) of the DFS owner AP connected to the external electronic device or the state in which the external electronic device may receive (or detect) the signal (e.g., the beacon signal) of the DFS owner AP connected to the electronic device 101. For example, the state in which at least one of the electronic device 101 or the external electronic device is located in the service area of the DFS owner AP connected to another electronic device may include at least one of the state in which the signal of the DFS owner AP is received (or detected) without being connected to the DFS owner AP connected to another electronic device or the state in which at least one of the electronic device 101 or the external electronic device is connected to the DFS owner AP connected to another electronic device. For example, the state in which the designated DFS usage condition is not satisfied may include the state in which at least one of the electronic device 101 or the external electronic device does not support the DFS, or the state in which the electronic device 101 and the external electronic device are not connected to the DFS owner AP or are not located in the service area of the DFS owner AP connected to another electronic device. For example, the state in which the electronic device 101 and the external electronic device are not located in the service area of the DFS owner AP connected to another electronic device may include the state in which the electronic device 101 may not receive (or detect) the signal (e.g., the beacon signal) of the DFS owner AP connected to the external electronic device and the state in which the external electronic device may not receive (or detect) the signal (e.g., the beacon signal) of the DFS owner AP connected to the electronic device 101.

For example, when determining that the designated DFS usage condition is not satisfied, the processor 200 may set the electronic device 101 as the group owner based on the designated first group owner setup method (e.g., the autonomous GO method). For example, the designated first group owner setup method may include the group owner setup method that sets, as the group owner, the device that has requested the direct communication connection via the wireless LAN communication. For example, the device that has requested the direct communication connection via the wireless LAN communication may include the device that has transmitted the search request message.

For example, when determining that the designated DFS usage condition is satisfied, the processor 200 may set the group owner based on the information relating to the DFS function of the electronic device 101 and the information relating to the DFS function of the external electronic device. For example, when the electronic device 101 that has requested the direct communication connection via the wireless LAN communication is connected to the DFS owner AP and the external electronic device is located in the service area of the DFS owner AP connected to the electronic device 101, the processor 200 may set the electronic device 101 as the group owner regardless of whether the external electronic device is connected to the DFS owner AP. For example, the processor 200 may set the external electronic device as the group owner when the external electronic device is connected to the DFS owner AP, the electronic device 101 is not connected to the DFS owner AP, and the electronic device 101 is located in the service area of the DFS owner AP connected to the external electronic device.

According to an embodiment, when setting the electronic device 101 as the group owner, the electronic device (e.g., the electronic device 101) or the processor (e.g., the processor 120 or 200) may perform the direct communication connection via the wireless LAN communication with the external electronic device. For example, the processor 200 may set the DFS channel as the channel for the direct communication via the wireless LAN communication with the external electronic device when the electronic device 101 performs the wireless LAN communication with the DFS owner AP using the DFS channel. For example, the processor 200 may select the channel for the direct communication via the wireless LAN communication with the external electronic device from among the channels supported by the electronic device 101 when the designated DFS usage condition is not satisfied. For example, the processor 200 may control the communication circuitry 210 to perform the direct communication connection via the wireless LAN communication with the external electronic device based on the channel (e.g., the DFS channel) for the direct communication via the wireless LAN communication with the external electronic device.

According to an embodiment, when setting the external electronic device as the group owner while the designated DFS usage condition is satisfied, the electronic device (e.g., the electronic device 101) or the processor (e.g., the processor 120 or 200) may perform the direct communication connection via the wireless LAN communication with the external electronic device based on the channel (e.g., the DFS channel) allocated by the external electronic device set as the group owner. For example, the processor 200 may control the communication circuitry 210 to transmit the information relating to the setting of the group owner to the external electronic device when the external electronic device is set as the group owner. In response to the transmission of the information relating to the setting of the group owner, the processor 200 may control the communication circuitry 210 to perform the direct communication connection via the wireless LAN communication with the external electronic device using the channel (e.g., the DFS channel) allocated by the external electronic device set as the group owner. For example, the information relating to the setting of the group owner may include at least one of group owner setup information of the external electronic device, a preferred channel of the electronic device 101, or the information indicating that the electronic device 101 is located in the service area of the DFS owner AP connected to the external electronic device. For example, the group owner setup information of the external electronic device is information for setting, as the group owner, the external electronic device, which has received a request for the direct communication connection via the wireless LAN communication, unlike the designated first group owner setup method, and may be referred to as update information of the designated first group owner setup method.

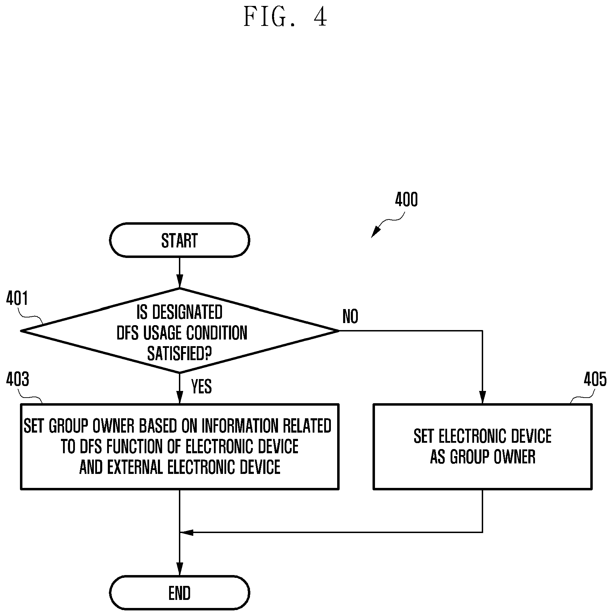

FIG. 4 is a flowchart (400) for setting the group owner based on the information relating to the DFS function in the electronic device according to an embodiment. For example, at least a portion of FIG. 4 may include detailed operations of operation 305 of FIG. 3. In the following embodiments, each operation may be performed sequentially, but is not necessarily performed sequentially. For example, the order of each operation may be changed, and at least two operations may also be performed in parallel. For example, the electronic device of FIG. 4 may be the electronic device 101 of FIG. 1 or 2.

According to an embodiment referring to FIG. 4, when receiving the search response message from the external electronic device (e.g., the operation 303 of FIG. 3), in operation 401, the electronic device (e.g., the electronic device 101 of FIG. 1 or 2) or the processor (e.g., the processor 120 of FIG. 1 or the processor 200 of FIG. 2) may identify whether the designated DFS usage condition is satisfied based on the information relating to the DFS function of the electronic device 101 and the information relating to the DFS function of the external electronic device. For example, when it is determined that the electronic device 101 and the external electronic device support the DFS, and at least one of the electronic device 101 or the external electronic device is connected to the DFS owner AP and located in the service area of the DFS owner AP connected to another electronic device, the processor 200 may determine that the designated DFS usage condition is satisfied. For example, the state in which at least one of the electronic device 101 or the external electronic device is located in the service area of the DFS owner AP connected to another electronic device may include at least one of the state in which the electronic device 101 may receive (or detect) the signal (e.g., the beacon signal) of the DFS owner AP connected to the external electronic device or the state in which the external electronic device may receive (or detect) the signal (e.g., the beacon signal) of the DFS owner AP connected to the electronic device 101. For example, the state in which at least one of the electronic device 101 or the external electronic device is located in the service area of the DFS owner AP connected to another electronic device may include at least one of the state in which the signal of the DFS owner AP is received (or detected) without being connected to the DFS owner AP connected to another electronic device or the state in which at least one of the electronic device 101 or the external electronic device is connected to the DFS owner AP connected to another electronic device.

For example, when it is determined that at least one of the electronic device 101 or the external electronic device does not support the DFS, or the electronic device 101 and the external electronic device are not connected to the DFS owner AP or are not located in the service area of the DFS owner AP connected to another electronic device, the processor 200 may determine that the designated DFS usage condition is not satisfied. For example, the state in which the electronic device 101 and the external electronic device are not located in the service area of the DFS owner AP connected to another electronic device may include the state in which the electronic device 101 may not receive (or detect) the signal (e.g., the beacon signal) of the DFS owner AP connected to the external electronic device and the state in which the external electronic device may not receive (or detect) the signal (e.g., the beacon signal) of the DFS owner AP connected to the electronic device 101.

According to an embodiment, when determining that the designated DFS usage condition is satisfied (e.g., 'Yes' in operation 401), in operation 403, the electronic device (e.g., the electronic device 101) or the processor (e.g., the processor 120 or 200) may set the group owner based on the information relating to the DFS function of the electronic device 101 and the information relating to the DFS function of the external electronic device. For example, when the electronic device 101 that has requested the direct communication connection via the wireless LAN communication is connected to the DFS owner AP and the external electronic device is located in the service area of the DFS owner AP connected to the electronic device 101, the processor 200 may set the electronic device 101 as the group owner regardless of whether the external electronic device is connected to the DFS owner AP. For example, the processor 200 may set the external electronic device as the group owner when the external electronic device is connected to the DFS owner AP, the electronic device 101 is not connected to the DFS owner AP, and the electronic device 101 is located in the service area of the DFS owner AP connected to the external electronic device.

According to an embodiment, when determining that the designated DFS usage condition is not satisfied (e.g., 'No' in operation 401), in operation 405, the electronic device (e.g., the electronic device 101) or the processor (e.g., processor 120 or 200) may set the electronic device 101 as the group owner. For example, when determining that the designated DFS usage condition is not satisfied, the processor 200 may set, as the group owner, the electronic device 101 that has requested the direct communication connection via the wireless LAN communication based on the designated first group owner setup method (e.g., the autonomous GO method). For example, the electronic device 101 that has requested the direct communication connection via the wireless LAN communication may include the electronic device 101 that has transmitted the search request message.

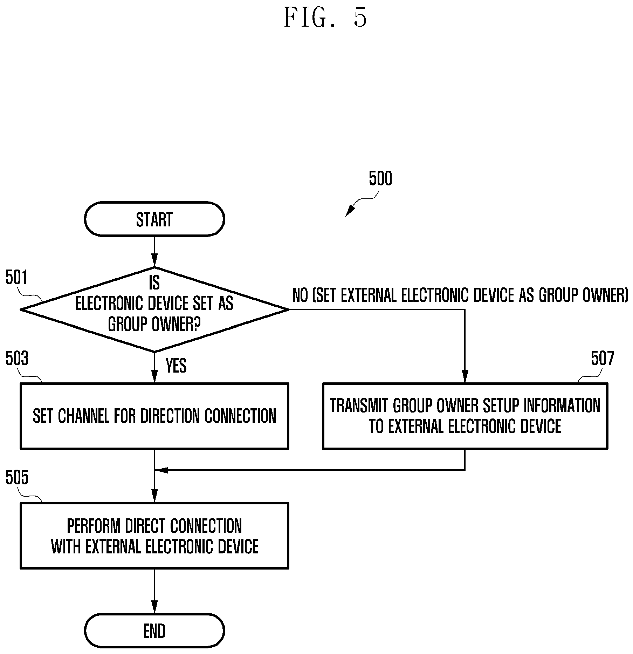

FIG. 5 is a flowchart (500) for performing the direct communication connection via the wireless LAN communication with an external electronic device in the electronic device according to an embodiment. In the following embodiments, each operation may be performed sequentially, but is not necessarily performed sequentially. For example, the order of each operation may be changed, and at least two operations may also be performed in parallel. For example, the electronic device of FIG. 5 may be the electronic device 101 of FIG. 1 or 2.

According to an embodiment referring to FIG. 5, when setting the group owner of the direct communication via the wireless LAN communication (e.g., the operation 305 of FIG. 3), in operation 501, the electronic device (e.g., the electronic device 101 of FIG. 1 or 2) or the processor (e.g., the processor 120 of FIG. 1 or the processor 200 of FIG. 2) may identify whether the electronic device 101 is set as the group owner of the direct communication via the wireless LAN communication.

According to an embodiment, when setting the electronic device 101 as the group owner of the direct communication via the wireless LAN communication (e.g., 'Yes' of operation 501), in operation 503, the electronic device (e.g., the electronic device 101) or the processor (e.g., the processor 120 or 200) may set the channel for the direct communication with the external electronic device. For example, the processor 200 may set the DFS channel as the channel for the direct communication via the wireless LAN communication with the external electronic device when the electronic device 101 performs the wireless LAN communication with the DFS owner AP using the DFS channel. For example, the processor 200 may select the channel for the direct communication via the wireless LAN communication with the external electronic device from among the channels supported by the electronic device 101 when the designated DFS usage condition is not satisfied.

According to an embodiment, in operation 505, the electronic device (e.g., the electronic device 101) or the processor (e.g., the processor 120 or 200) may perform the direct communication connection with the external electronic device based on the channel set for the direct communication with the external electronic device.

According to an embodiment, when setting the external electronic device as the group owner of the direct communication via the wireless LAN communication (e.g., 'No' of operation 501), in operation 507, the electronic device (e.g., the electronic device 101) or the processor (e.g., the processor 120 or 200) may transmit the information relating to the setting of the group owner to the external electronic device. For example, the information relating to the setting of the group owner may include at least one of the group owner setup information of the external electronic device, the preferred channel of the electronic device 101, or the information indicating that the electronic device 101 is located in the service area of the DFS owner AP connected to the external electronic device. For example, the group owner setup information of the external electronic device is information for setting, as the group owner, the external electronic device, which has received a request for the direct communication connection via the wireless LAN communication, unlike the designated first group owner setup method, and may be referred to as update information of the designated first group owner setup method.

According to an embodiment, in operation 505, the electronic device (e.g., the electronic device 101) or the processor (e.g., the processor 120 or 200) may perform the direct communication connection via the wireless LAN communication with the external electronic device based on the channel (e.g., the DFS channel) allocated by the external electronic device set as the group owner.

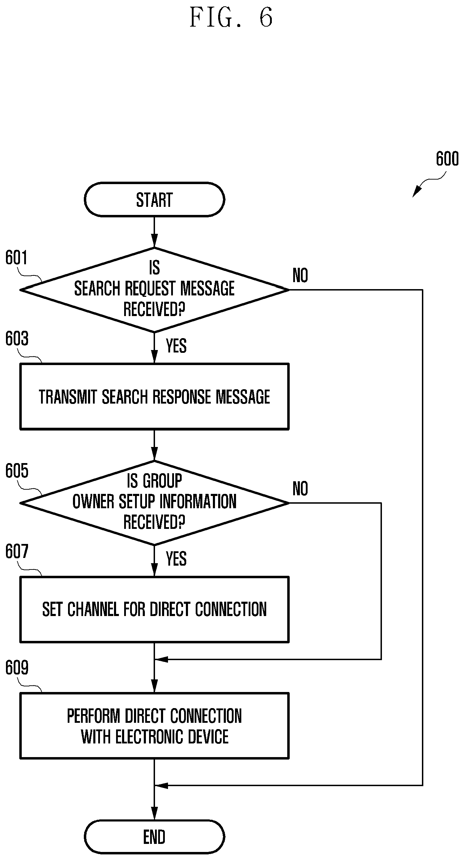

FIG. 6 is a flowchart (600) for performing the direct communication connection via the wireless LAN communication with the electronic device in the external electronic device according to an embodiment. In the following embodiments, each operation may be performed sequentially, but is not necessarily performed sequentially. For example, the order of each operation may be changed, and at least two operations may also be performed in parallel. For example, the electronic device of FIG. 6 may be the electronic device 101 of FIG. 1 or 2.

According to an embodiment referring to FIG. 6, in operation 601, the external electronic device or the processor may identify whether the search request message is received. For example, the external electronic device may receive the search request message through a scan according to the OOB communication method. For example, the search request message is the information relating to the DFS (dynamic frequency selection) function of the electronic device 101, and may include at least one of the support information (or information on whether the DFS function is supported) for the DFS of the electronic device 101, or the information relating to the DFS owner access point (AP) connected to the electronic device 101. For example, the search request message may include the message (e.g., the BLE advertisement message) of the out of band (OOB) communication.

According to an embodiment, when the search request message is not received (e.g., 'No' in operation 601), the method ends.

According to an embodiment, when the search request message is received (e.g., 'Yes' in operation 601), in operation 603, the external electronic device or the processor may transmit the search response message corresponding to the search request message. For example, the search response message is the information relating to the DFS function of the external electronic device, and may include at least one of the support information (or information on whether the DFS function is supported) for the DFS of the external electronic device, the information relating to the DFS owner AP connected to the external electronic device, or the information indicating that the external electronic device is located in the service area of the DFS owner AP connected to the electronic device 101. For example, the search response message may include the message of the OOB communication (e.g., the BLE advertisement message). For example, the information indicating that the external electronic device is located in the service area of the DFS owner AP connected to the electronic device 101 may include the state in which the external electronic device may receive (or detect) the signal (e.g., the beacon signal) of the DFS owner AP connected to the electronic device 101. For example, the external electronic device may or may not be connected to the DFS owner AP within the service area of the DFS owner AP connected to the electronic device 101.

According to an embodiment, in operation 605, the external electronic device may determine whether the information relating to the group owner setup is received from the electronic device 101.

According to an embodiment, when the external electronic device receives the information relating to the group owner setup from the electronic device 101 (e.g., 'Yes' in operation 605), in operation 607, the external electronic device may set the channel for the direct communication with the electronic device 101. For example, the external electronic device may set the external electronic device as the group owner for the direct communication via the wireless LAN communication with the electronic device 101 based on the information relating to the group owner setup. For example, when the external electronic device performs the wireless LAN communication with the DFS owner AP using the DFS channel, the external electronic device may set the DFS channel as the channel for the direct communication via the wireless LAN communication with the electronic device 101.

According to an embodiment, the external electronic device may perform the direct communication connection with the electronic device 101 based on the channel (e.g., the DFS channel) set for the direct communication with the electronic device 101 in operation 609.

According to an embodiment, when the external electronic device does not receive the information relating to the group owner setup (e.g., 'No' in operation 605), in operation 609, the external electronic device may perform the direct communication connection via the wireless LAN communication with the electronic device 101 based on the channel allocated by the electronic device 101 set as the group owner.

FIG. 7 is an example for performing the direct communication connection via the wireless LAN communication with the external electronic device in the electronic device according to an embodiment.

According to an embodiment referring to FIG. 7, the electronic device 101 may transmit the search request message to search for whether there is the device for the direct communication via the wireless LAN communication (e.g., operation 711). For example, the electronic device 101 may transmit the search request message when the event relating to the direct communication via the wireless LAN communication is detected. For example, the search request message may include the information relating to the DFS function of the electronic device 101, including at least one of the support information (or information on whether the DFS function is supported) for the DFS of the electronic device 101 (e.g., attribute ID) or the information relating to the DFS owner access point (AP) connected to the electronic device 101 (e.g., AP info list), as illustrated in Table 1 and Table 2. For example, when the electronic device 101 accesses (or is connected to) the DFS owner AP, the information relating to the DFS owner AP connected to the electronic device 101 may include at least one of the identification information (e.g., the basic service set identifier (BSSID)) for the DFS owner AP which the electronic device 101 accesses (or is connected to) or the channel information (e.g., channel number) for the wireless LAN communication with the DFS owner AP. For example, the search request message may include the message (e.g., the BLE advertisement message) of the out of band (OOB) communication. For example, the event relating to the direct communication via the wireless LAN communication may be detected based on at least one of the execution of the application or function relating to the direct communication via the wireless LAN communication, the reception of the user input (e.g., the touch input or the gesture input) relating to the direct communication via the wireless LAN communication, or the reception of the control signal relating to the direct communication via the wireless LAN communication.

**[Table 1]**

| Field | Size | Value | Description |
|---|---|---|---|
| Attribute ID | 1 | 30 | Identifying the type of P2P attribute. The specific value is defined in Table 6. |
| Length | 2 | variable | Length of the following fields in the attribute |
| AP Info List | 9 * N | variable | Including one or more AP info fields. where N is the number of AP info fields. The AP info field is defined in Table y2. |

For example, the AP Info List in Table 1 may be configured as in Table 2.

**[Table 2]**

| Field | Size | Value | Description |
|---|---|---|---|
| Flag | 1 | variable | Bit 0 set to 1 indicates that the P2P Device' WLAN STA interface is concurrently associated with the AP. Bit 0 set to 0 indicates that the P2P device can hear the AP, but not concurrently associated with the AP. Bit 1 to Bit7: reserved |
| BSSID | 6 | variable | Identifying BSSID of the WLAN AP. |
| Country String | 3 | variable | The country string field is set to the value contained in the dot11 Country String attribute in [1], specifying the country code in which the Channel Entry List is valid. The third octet of the Country String field is set to hex 04 to indicate that Table E-4 is used. |
| Operating class | 1 | variable | Indicating the frequency band at which the WLAN AP is operating |
| Channel Number | 1 | variable | Indicating the channel number at which the WLAN AP is operating |

According to an embodiment, when an external electronic device 700 receives the search request message, the external electronic device 700 may transmit the search response message corresponding to the search request message (e.g., operation 713). For example, the search response message is the information relating to the DFS function of the external electronic device 700, and may include at least one of the support information (or information on whether the DFS function is supported) for the DFS of the external electronic device 700, the information relating to the DFS owner AP 710 connected to the external electronic device 700, or the information indicating that the external electronic device 700 is located in the service area of the DFS owner AP 710 connected to the electronic device 101. For example, the search response message may include the message of the OOB communication (e.g., the BLE advertisement message). For example, the information indicating that the external electronic device 700 is located in the service area of the DFS owner AP 710 connected to the electronic device 101 may include the state in which the external electronic device 700 may receive (or detect) the signal (e.g., the beacon signal) of the DFS owner AP 710 connected to the electronic device 101.

According to an embodiment, the electronic device 101 may identify the information relating to the DFS function of the external electronic device 700 from the search response message. The electronic device 101 may set the group owner of the direct communication via the wireless LAN communication based on the information relating to the DFS function of the electronic device 101 and the information relating to the DFS function of the external electronic device 700 (e.g., operation 715). For example, the electronic device 101 may identify whether the designated DFS usage condition is satisfied based on the information relating to the DFS function of the electronic device 101 and the information relating to the DFS function of the external electronic device 700. For example, the state in which the designated DFS usage condition is satisfied may include the state in which the electronic device 101 and the external electronic device 700 support the DFS, and at least one of the electronic device 101 or the external electronic device 700 is connected to the DFS owner AP 710 and is located in the service area of the DFS owner AP 710 connected to another electronic device. For example, the state in which at least one of the electronic device 101 or the external electronic device 700 is located in the service area of the DFS owner AP 710 connected to another electronic device may include at least one of the state in which the electronic device 101 may receive (or detect) the signal (e.g., the beacon signal) of the DFS owner AP 710 connected to the external electronic device 700 or the state in which the external electronic device 700 may receive (or detect) the signal (e.g., the beacon signal) of the DFS owner AP 710 connected to the electronic device 101. For example, the state in which the designated DFS usage condition is not satisfied may include the state in which at least one of the electronic device 101 or the external electronic device 700 does not support the DFS, or the state in which the electronic device 101 and the external electronic device 700 are not connected to the DFS owner AP 710 or are not located in the service area of the DFS owner AP 710 connected to another electronic device. For example, the state in which the electronic device 101 and the external electronic device 700 are not located in the service area of the DFS owner AP 710 connected to another electronic device may include the state in which the electronic device 101 may not receive (or detect) the signal (e.g., the beacon signal) of the DFS owner AP 710 connected to the external electronic device 700 and the state in which the external electronic device 700 may not receive (or detect) the signal (e.g., the beacon signal) of the DFS owner AP 710 connected to the electronic device 101.

For example, when the electronic device 101 determines that the designated DFS usage condition is satisfied, the electronic device 101 may set the group owner based on the information relating to the DFS function of the electronic device 101 and the information relating to the DFS function of the external electronic device 700. For example, when the electronic device 101 that has requested the direct communication connection via the wireless LAN communication and is connected to the DFS owner AP 710, and the external electronic device 700 is located in the service area of the DFS owner AP 710 connected to the electronic device 101, the electronic device 101 may be set as the group owner of the direct communication via the wireless LAN communication. For example, when the external electronic device 700 is connected to the DFS owner AP 710, the electronic device 101 is not connected to the DFS owner AP 710, and the electronic device 101 is located in the service area of the DFS owner AP 710 connected to the external electronic device 700, the electronic device 101 may set the external electronic device 700 as the group owner for the direct communication via the wireless LAN communication.

According to an embodiment, when setting the external electronic device 700 as the group owner while the designated DFS usage condition is satisfied, the electronic device 101 may transmit the information relating to the setting of the group owner to the external electronic device 700 (e.g., operation 717). For example, the information relating to the setting of the group owner may include at least one of the group owner setup information of the external electronic device, the preferred channel of the electronic device 101, or the information indicating that the electronic device 101 is located in the service area of the DFS owner AP 710 connected to the external electronic device. For example, the group owner setup information of the external electronic device is information for setting, as the group owner, the external electronic device, which has received a request for the direct communication connection via the wireless LAN communication, unlike the designated first group owner setup method, and may be referred to as update information of the designated first group owner setup method.

According to an embodiment, when the external electronic device 700 receives information relating to setting the group owner from the electronic device 101 (e.g., the operation 717), the external electronic device 700 may set the external electronic device 700 as the group owner for direct communication with the electronic device 101 based on the information relating to setting the group owner (e.g., the operation 719). For example, when the external electronic device 700 performs the wireless LAN communication using the DFS owner AP 710 and the DFS channel, the external electronic device 700 may set the DFS channel as the channel for the direct communication via the wireless LAN communication with the electronic device 101.

According to an embodiment, the external electronic device 700 may perform the direct communication connection with the electronic device 101 based on the channel (e.g., the DFS channel) set for the direct communication with the electronic device 101 (e.g., operation 721).

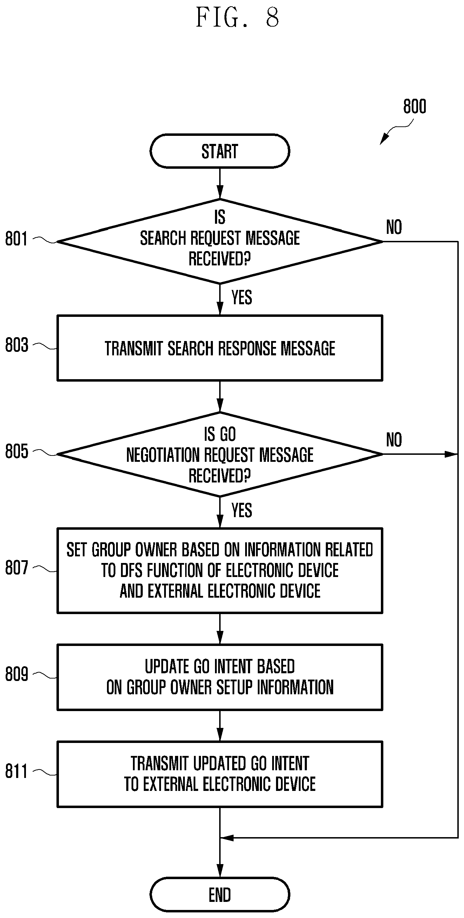

FIG. 8 is a flowchart (800) for setting the group owner for the direct communication via the wireless LAN communication in the electronic device according to an embodiment. In the following embodiments, each operation may be performed sequentially, but is not necessarily performed sequentially. For example, the order of each operation may be changed, and at least two operations may also be performed in parallel. For example, the electronic device of FIG. 8 may be the electronic device 101 of FIG. 1 or 2.

According to an embodiment referring to FIG. 8, in operation 801, the electronic device (e.g., the electronic device 101 of FIG. 1 or 2) or the processor (e.g., the processor 120 of FIG. 1 or the processor 200 of FIG. 2) may identify whether the search request message is received via the wireless LAN communication. For example, the processor 200 may identify whether the search request message is received in a standby mode (e.g., a search standby mode or a connection standby mode) relating to the direct communication via the wireless LAN communication. For example, the search request message may include the probe request message or the service discovery frame (SDF) that is related to the search request.

According to an embodiment, when not receiving the search request message via the wireless LAN communication (e.g., 'No' in operation 801), the electronic device (e.g., the electronic device 101) or the processor (e.g., processor 120 or 200) may terminate an embodiment for setting the group owner of the direct communication via the wireless LAN communication.

According to an embodiment, when receiving the search request message via the wireless LAN communication (e.g., 'Yes' in operation 801), in operation 803, the electronic device (e.g., the electronic device 101) or the processor (e.g., processor 120 or 200) may transmit the search response message corresponding to the search request message. For example, the search response message may include a probe response message or the SDF relating to the search response. For example, the search response message is the information relating to the DFS (dynamic frequency selection) function of the electronic device 101, and may include at least one of the support information (or information on whether the DFS function is supported) for the DFS of the electronic device 101, or the information relating to the DFS owner AP connected to the electronic device 101.

According to an embodiment, in operation 805, the electronic device (e.g., the electronic device 101) or the processor (e.g., the processor 120 or 200) may identify whether the group owner negotiation request message is received.

According to an embodiment, when no receiving the group owner negotiation request message (e.g., 'No' in operation 805), the electronic device (e.g., the electronic device 101) or the processor (e.g., the processor 120 or 200) may terminate an embodiment for setting the group owner of the direct communication via the wireless LAN communication.

According to an embodiment, when receiving the group owner negotiation request message (e.g., 'Yes' in operation 805), in operation 807, the electronic device (e.g., the electronic device 101) or the processor (e.g., the processor 120 or 200) may set the group owner of the direct communication via the wireless LAN communication based on the information relating to the DFS function of the electronic device 101 and the information relating to the DFS function of the external electronic device. For example, the processor 200 may identify the information relating to the DFS function of the external electronic device in the group owner negotiation request message. The processor 200 may determine whether the designated DFS usage condition is satisfied based on the information relating to the DFS function of the electronic device 101 and the information relating to the DFS function of the external electronic device. For example, the state in which the designated DFS usage condition is satisfied may include the state in which the electronic device 101 and the external electronic device support the DFS, and at least one of the electronic device 101 or the external electronic device is connected to the DFS owner AP and is located in the service area of the DFS owner AP connected to another electronic device. For example, the state in which at least one of the electronic device 101 or the external electronic device is located in the service area of the DFS owner AP connected to another electronic device may include at least one of the state in which the electronic device 101 may receive (or detect) the signal (e.g., the beacon signal) of the DFS owner AP connected to the external electronic device or the state in which the external electronic device may receive (or detect) the signal (e.g., the beacon signal) of the DFS owner AP connected to the electronic device 101. For example, the state in which the designated DFS usage condition is not satisfied may include the state in which at least one of the electronic device 101 or the external electronic device does not support the DFS, or the state in which the electronic device 101 and the external electronic device are not connected to the DFS owner AP or are not located in the service area of the DFS owner AP connected to another electronic device. For example, the state in which the electronic device 101 and the external electronic device are not located in the service area of the DFS owner AP connected to another electronic device may include the state in which the electronic device 101 may not receive (or detect) the signal (e.g., the beacon signal) of the DFS owner AP connected to the external electronic device and the state in which the external electronic device may not receive (or detect) the signal (e.g., the beacon signal) of the DFS owner AP connected to the electronic device 101.

For example, when determining that the designated DFS usage condition is satisfied, the processor 200 may set the group owner based on the information relating to the DFS function of the electronic device 101 and the information relating to the DFS function of the external electronic device. For example, when the electronic device 101 that has requested the direct communication connection via the wireless LAN communication is connected to the DFS owner AP and the external electronic device is located in the service area of the DFS owner AP connected to the electronic device 101, the processor 200 may set the electronic device 101 as the group owner regardless of whether the external electronic device is connected to the DFS owner AP. For example, the processor 200 may set the external electronic device as the group owner when the external electronic device is connected to the DFS owner AP, the electronic device 101 is not connected to the DFS owner AP, and the electronic device 101 is located in the service area of the DFS owner AP connected to the external electronic device.

According to an embodiment, in operation 809, the electronic device (e.g., the electronic device 101) or the processor (e.g., the processor 120 or 200) may update the group owner intent of the electronic device 101 based on the group owner setup information. For example, when the electronic device 101 is set as the group owner and the group owner intent of the electronic device 101 is smaller than the group owner intent of the external electronic device, the processor 200 may update the group owner intent of the electronic device 101 to be greater than the group owner intent of the external electronic device. For example, when the electronic device 101 is set as the group owner and the group owner intent of the electronic device 101 is greater than the group owner intent of the external electronic device, the processor 200 may maintain the group owner intent of the electronic device 101.

For example, when the external electronic device is set as the group owner and the group owner intent of the electronic device 101 is greater than the group owner intent of the external electronic device, the processor 200 may update the group owner intent of the electronic device 101 to be smaller than the group owner intent of the external electronic device. For example, when the external electronic device is set as the group owner and the group owner intent of the electronic device 101 is smaller than the group owner intent of the external electronic device, the processor 200 may maintain the group owner intent of the electronic device 101.

According to an embodiment, in operation 811, the electronic device (e.g., the electronic device 101) or the processor (e.g., the processor 120 or 200) may transmit the group owner intent (or the updated group owner intent) of the electronic device 101 to the external electronic device. For example, the processor 200 may control the communication circuitry 210 to transmit the group owner negotiation response message including the information relating to the group owner intent of the electronic device 101 and the group owner negotiation temporary suspension (e.g., GO negotiation response states 1) to the external electronic device. The processor 200 may control the communication circuitry 210 to transmit, to the external electronic device, the group owner negotiation request message including the information relating to the group owner intent of the electronic device 101 that is optionally updated based on the information relating to the DFS function of the electronic device 101 and the information relating to the DFS function of the external electronic device. For example, when the processor 200 receives the group owner negotiation response message corresponding to the group owner negotiation request message from the external electronic device, the processor 200 may identify the group owner intent of the external electronic device from the group owner negotiation response message. The processor 200 may set the group owner of the direct communication via the wireless LAN communication by using the group owner intent of the electronic device 101 and the group owner intent of the external electronic device according to a designated second group owner setup method. The processor 200 may control the communication circuitry 210 to transmit the group owner setup completion message including the group owner setup information to the external electronic device. For example, the group owner may be set as a device having the greater group owner intent among the electronic device 101 and the external electronic device for performing the direct communication via the wireless LAN communication according to the designated second group owner setup method.

For example, when the processor 200 accepts the direct connection via the wireless LAN communication with the external electronic device, the processor 200 may control the communication circuitry 210 to transmit the group owner negotiation response message including the information relating to the updated group owner intent of the electronic device 101 to the external electronic device. When the processor 200 receives the group owner negotiation completion message from the external electronic device, the processor 200 may identify the group owner set by the external electronic device.

According to an embodiment, when setting the electronic device 101 as the group owner, the electronic device (e.g., the electronic device 101) or the processor (e.g., the processor 120 or 200) may perform the direct communication connection via the wireless LAN communication with the external electronic device. For example, the processor 200 may set the DFS channel as the channel for the direct communication via the wireless LAN communication with the external electronic device when the electronic device 101 performs the wireless LAN communication using the DFS owner AP and the DFS channel. The processor 200 may control the communication circuitry 210 to perform the direct communication connection via the wireless LAN communication with the external electronic device based on the channel (e.g., the DFS channel) for the direct communication via the wireless LAN communication with the external electronic device.

According to an embodiment, when setting the external electronic device as the group owner while the designated DFS usage condition is satisfied, the electronic device (e.g., the electronic device 101) or the processor (e.g., the processor 120 or 200) may perform the direct communication connection via the wireless LAN communication with the external electronic device based on the channel (e.g., the DFS channel) allocated by the external electronic device set as the group owner.

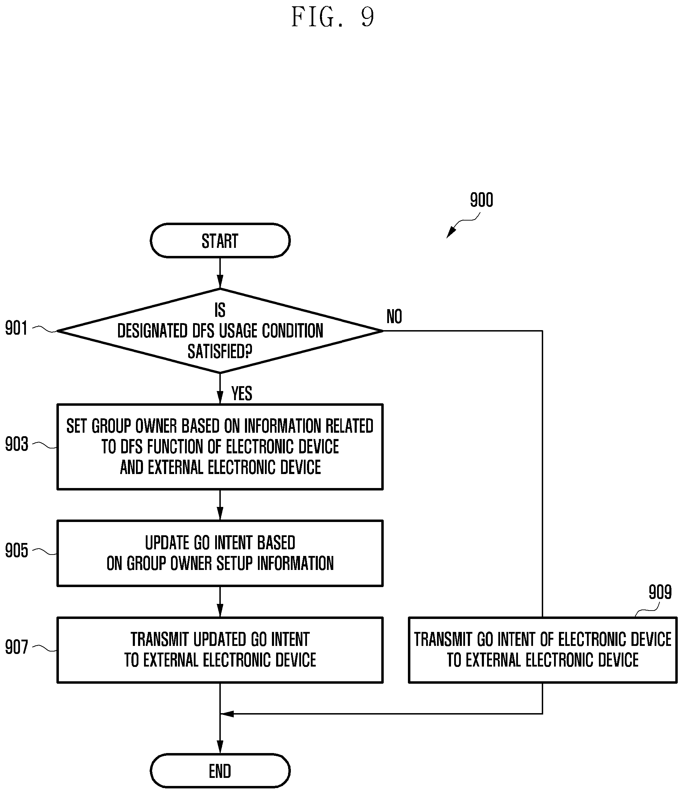

FIG. 9 is a flowchart for transmitting the group owner intent in the electronic device according to an embodiment. For example, at least a portion of FIG. 9 may include detailed descriptions of operations 807 to 811 of FIG. 8. In the following embodiments, each operation may be performed sequentially, but is not necessarily performed sequentially. For example, the order of each operation may be changed, and at least two operations may also be performed in parallel. For example, the electronic device of FIG. 9 may be the electronic device 101 of FIG. 1 or 2.

According to an embodiment referring to FIG. 9, when receiving the group owner negotiation request message (e.g., 'Yes' of the operation 805 of FIG. 8), in operation 901, the electronic device (e.g., the electronic device 101 of FIG. 1 or 2) or the processor (e.g., the processor 120 of FIG. 1 or the processor 200 of FIG. 2) may identify whether the designated DFS usage condition is satisfied based on the information relating to the DFS function of the electronic device 101 and the information relating to the DFS function of the external electronic device. For example, when determining that the electronic device 101 and the external electronic device support the DFS, and at least one of the electronic device 101 or the external electronic device is connected to the DFS owner AP and located in the service area of the DFS owner AP connected to another electronic device, the processor 200 may determine that the designated DFS usage condition is satisfied. For example, the state in which at least one of the electronic device 101 or the external electronic device is located in the service area of the DFS owner AP connected to another electronic device may include at least one of the state in which the electronic device 101 may receive (or detect) the signal (e.g., the beacon signal) of the DFS owner AP connected to the external electronic device or the state in which the external electronic device may receive (or detect) the signal (e.g., the beacon signal) of the DFS owner AP connected to the electronic device 101.

For example, when determining that at least one of the electronic device 101 or the external electronic device does not support the DFS, or the electronic device 101 and the external electronic device are not connected to the DFS owner AP or are not located in the service area of the DFS owner AP connected to another electronic device, the processor 200 may determine that the designated DFS usage condition is not satisfied. For example, the state in which the electronic device 101 and the external electronic device are not located in the service area of the DFS owner AP connected to another electronic device may include the state in which the electronic device 101 may not receive (or detect) the signal (e.g., the beacon signal) of the DFS owner AP connected to the external electronic device and the state in which the external electronic device may not receive (or detect) the signal (e.g., the beacon signal) of the DFS owner AP connected to the electronic device 101.

According to an embodiment, when determining that the designated DFS usage condition is satisfied (e.g., 'Yes' in operation 901), in operation 903, the electronic device (e.g., the electronic device 101) or the processor (e.g., the processor 120 or 200) may set the group owner of the direct communication via the wireless LAN communication based on the information relating to the DFS function of the electronic device 101 and the information relating to the DFS function of the external electronic device. For example, when the electronic device 101 that has requested the direct communication connection via the wireless LAN communication is connected to the DFS owner AP and the external electronic device is located in the service area of the DFS owner AP connected to the electronic device 101, the processor 200 may set the electronic device 101 as the group owner regardless of whether the external electronic device is connected to the DFS owner AP. For example, the processor 200 may set the external electronic device as the group owner when the external electronic device is connected to the DFS owner AP, the electronic device 101 is not connected to the DFS owner AP, and the electronic device 101 is located in the service area of the DFS owner AP connected to the external electronic device.

According to an embodiment, in operation 905, the electronic device (e.g., the electronic device 101) or the processor (e.g., the processor 120 or 200) may optionally update the group owner intent of the electronic device 101 based on the group owner setup information. For example, when the electronic device 101 is set as the group owner and the group owner intent of the electronic device 101 is smaller than the group owner intent of the external electronic device, the processor 200 may update the group owner intent of the electronic device 101 to be greater than the group owner intent of the external electronic device. For example, when the electronic device 101 is set as the group owner and the group owner intent of the electronic device 101 is greater than the group owner intent of the external electronic device, the processor 200 may maintain the group owner intent of the electronic device 101.

For example, when the external electronic device is set as the group owner and the group owner intent of the electronic device 101 is greater than the group owner intent of the external electronic device, the processor 200 may update the group owner intent of the electronic device 101 to be smaller than the group owner intent of the external electronic device. For example, when the external electronic device is set as the group owner and the group owner intent of the electronic device 101 is smaller than the group owner intent of the external electronic device, the processor 200 may maintain the group owner intent of the electronic device 101.

According to an embodiment, in operation 907, the electronic device (e.g., the electronic device 101) or the processor (e.g., the processor 120 or 200) may transmit the optionally updated group owner intent of the electronic device 101 to the external electronic device. For example, the processor 200 may control the communication circuitry 210 to transmit the group owner negotiation response message including the information relating to the group owner intent of the electronic device 101 and the group owner negotiation temporary suspension (e.g., GO negotiation response states 1) to the external electronic device. The processor 200 may control the communication circuitry 210 to transmit, to the external electronic device, the group owner negotiation request message including the information relating to the group owner intent of the electronic device 101 that is optionally updated based on the information relating to the DFS function of the electronic device 101 and the information relating to the DFS function of the external electronic device.

For example, when the processor 200 accepts the direct connection via the wireless LAN communication with the external electronic device, the processor 200 may control the communication circuitry 210 to transmit the group owner negotiation response message including the information relating to the updated group owner intent of the electronic device 101 to the external electronic device.

According to an embodiment, when determining that the designated DFS usage condition is not satisfied (e.g., 'NO' in operation 901), in operation 909, the electronic device (e.g., the electronic device 101) or the processor (e.g., the processor 120 or 200) may transmit the group owner intent of the electronic device 101 to the external electronic device. For example, the processor 200 may control the communication circuitry 210 to transmit the group owner negotiation response message including the information relating to the group owner intent of the electronic device 101 and the group owner negotiation temporary suspension (e.g., GO negotiation response states 1) to the external electronic device. The processor 200 may control the communication circuitry 210 to transmit the group owner negotiation request message including the information relating to the group owner intent of the electronic device 101 to the external electronic device.

For example, when the processor 200 accepts the direct connection via the wireless LAN communication with the external electronic device, the processor 200 may control the communication circuitry 210 to transmit the group owner negotiation response message including the information relating to the group owner intent of the electronic device 101 to the external electronic device.

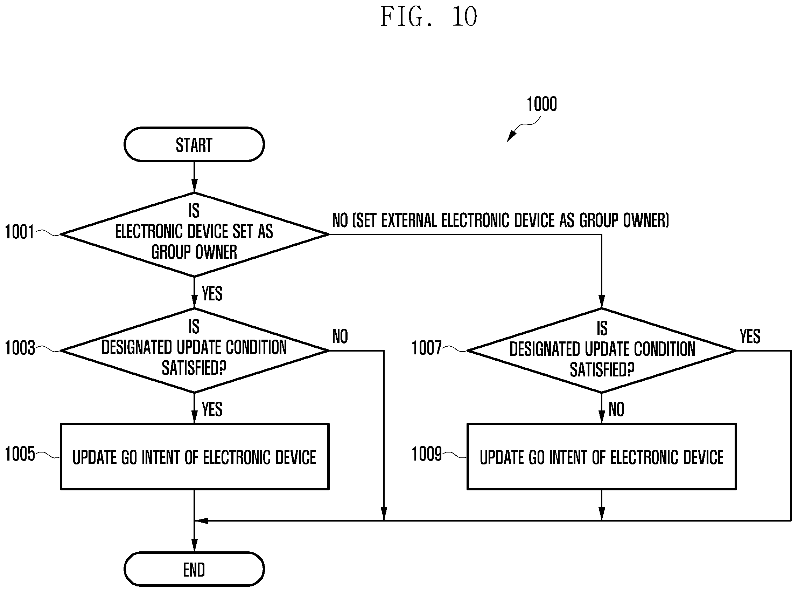

FIG. 10 is a flowchart (1000) for updating the group owner intent in the electronic device according to an embodiment. For example, at least a portion of FIG. 10 may include a detailed description of operation 809 of FIG. 8 or operation 905 of FIG. 9. In the following embodiments, each operation may be performed sequentially, but is not necessarily performed sequentially. For example, the order of each operation may be changed, and at least two operations may also be performed in parallel. For example, the electronic device of FIG. 10 may be the electronic device 101 of FIG. 1 or 2.

According to an embodiment referring to FIG. 10, when setting the group owner of the direct communication via the wireless LAN communication based on the information relating to the DFS function of the electronic device 101 and the information relating to the DFS function of the external electronic device (e.g., operation 807 of FIG. 8 or operation 903 of FIG. 9), in operation 1001, the electronic device (e.g., the electronic device 101 of FIG. 1 or 2) or the processor (e.g., processor 120 of FIG. 1 or the processor 200 of FIG. 2) may identify whether the electronic device 101 is set as the group owner of the direct communication via the wireless LAN communication.

According to an embodiment, when setting the electronic device 101 as the group owner of the direct communication via the wireless LAN communication (e.g., 'Yes' in operation 1001), in operation 1003, the electronic device (e.g., the electronic device 101) or the processor (e.g., the processor 120 or 200) may identify whether the group owner intent of the electronic device 101 and the group owner intent of the external electronic device satisfy a designated update condition. For example, the state in which the specified update condition is satisified may include a state in which the group owner intent of the external electronic device is greater than the group owner intent of the electronic device 101. For example, the state in which the specified update condition is not satisfied may include a state in which the group owner intent of the external electronic device is smaller than or equal to the group owner intent of the electronic device 101.

According to an embodiment, when determining that the designated update condition is satisfied (e.g., 'Yes' in operation 1003), in operation 1005, the electronic device (e.g., the electronic device 101) or the processor (e.g., the processor 120 or 200) may update the group owner intent of the electronic device 101. For example, when the electronic device 101 is set as the group owner and the group owner intent of the electronic device 101 is smaller than the group owner intent of the external electronic device, the processor 200 may update the group owner intent of the electronic device 101 to be greater than the group owner intent of the external electronic device.

According to an embodiment, when determining that the designated update condition is not satisfied (e.g., 'No' in operation 1003), the electronic device (e.g., the electronic device 101) or the processor (e.g., the processor 120 or 200) may terminate the embodiment for updating the group owner intent. For example, when the electronic device 101 is set as the group owner and the group owner intent of the electronic device 101 is greater than the group owner intent of the external electronic device, the processor 200 may maintain the group owner intent of the electronic device 101.

According to an embodiment, when setting the external electronic device as the group owner of the direct communication via the wireless LAN communication (e.g., 'No' in operation 1001), in operation 1007, the electronic device (e.g., the electronic device 101) or the processor (e.g., the processor 120 or 200) may identify whether the group owner intent of the electronic device 101 and the group owner intent of the external electronic device satisfy the designated update condition.

According to an embodiment, when determining that the designated update condition is not satisfied (e.g., 'No' in operation 1007), in operation 1009, the electronic device (e.g., the electronic device 101) or the processor (e.g., the processor 120 or 200) may update the group owner intent of the electronic device 101. For example, when the external electronic device is set as the group owner and the group owner intent of the electronic device 101 is greater than the group owner intent of the external electronic device, the processor 200 may update the group owner intent of the electronic device 101 to be smaller than the group owner intent of the external electronic device.

According to an embodiment, when determining that the designated update condition is satisfied (e.g., 'Yes' in operation 1007), the electronic device (e.g., the electronic device 101) or the processor (e.g., the processor 120 or 200) may terminate the embodiment for updating the group owner intent. For example, when the external electronic device is set as the group owner and the group owner intent of the electronic device 101 is smaller than the group owner intent of the external electronic device, the processor 200 may maintain the group owner intent of the electronic device 101.

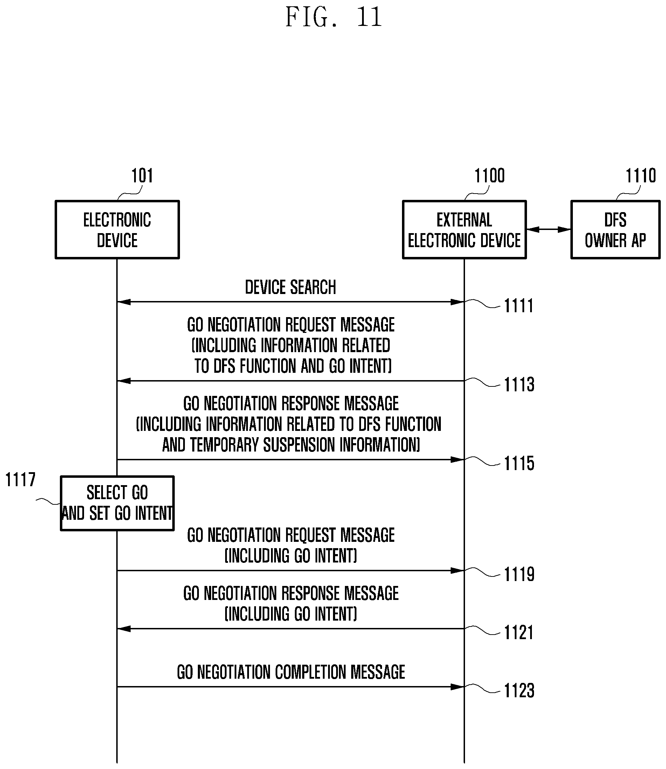

FIG. 11 is an example for setting the group owner based on the group owner intent in the electronic device according to an embodiment.

According to an embodiment referring to FIG. 11, an external electronic device 1100 may detect the electronic device 101 for the direct communication via the wireless LAN communication through the device search (e.g., operation 1111). For example, the external electronic device 1100 may transmit the search request message when the event relating to the direct communication via the wireless LAN communication is detected. For example, the event relating to the direct communication via the wireless LAN communication may be detected based on at least one of the execution of the application or function relating to the direct communication via the wireless LAN communication, the reception of the user input (e.g., the touch input or the gesture input) relating to the direct communication via the wireless LAN communication, or the reception of the control signal relating to the direct communication via the wireless LAN communication. For example, the search request message may include the probe request message or the service discovery frame (SDF) that is related to the search request.

For example, when receiving the search request message via the wireless LAN communication, the electronic device 101 may transmit the search response message corresponding to the search request message. For example, the search response message may include the probe response message or the SDF relating to the search response. For example, the search response message is the information relating to the DFS (dynamic frequency selection) function of the electronic device 101, and may include at least one of the support information (or information on whether the DFS function is supported) for the DFS of the electronic device 101, or the information relating to the DFS owner AP 1110 connected to the electronic device 101.

According to an embodiment, the external electronic device 1100 may transmit the group owner negotiation request message to the electronic device 101 based on the detection of the electronic device 101 through the device search (e.g., operation 1113). For example, the group owner negotiation request message may include the group owner intent of the external electronic device 1100 and the information relating to the DFS function of the external electronic device 1100. For example, the information relating to the DFS function of the external electronic device 1100 may include at least one of support information (or information on whether the DFS function is supported) of a DFS of the external electronic device 1100, information relating to a DFS owner AP 1110 connected to the external electronic device 1100, or the information indicating that the external electronic device 1100 is located in the service area of the DFS owner AP 1110 connected to the electronic device 101. For example, when the external electronic device 1100 accesses (or is connected to) the DFS owner AP 1110, the information relating to the DFS owner AP 1110 connected to the external electronic device 1100 may include at least one of identification information (e.g., SSID or BSSID) for the DFS owner AP 1110 which the external electronic device 1100 accesses (or is connected to) or channel information for the wireless LAN communication with the DFS owner AP 1110.

According to an embodiment, when receiving the group owner negotiation request message (e.g., operation 1113), the electronic device 101 may transmit the group owner negotiation response message including the information relating to the group owner intent of the electronic device 101 and the group owner negotiation temporary suspension (e.g., GO negotiation response states 1) to the external electronic device 1100 (e.g., operation 1115).

According to an embodiment, the electronic device 101 may set the group owner of the direct communication via the wireless LAN communication based on the information relating to the DFS function of the electronic device 101 and the information relating to the DFS function of the external electronic device 1100 (e.g., operation 1117). For example, the electronic device 101 may identify whether the designated DFS usage condition is satisfied based on the information relating to the DFS function of the electronic device 101 and the information relating to the DFS function of the external electronic device 1100. For example, the state in which the designated DFS usage condition is satisfied may include the state in which the electronic device 101 and the external electronic device 1100 support the DFS, and at least one of the electronic device 101 or the external electronic device 1100 is connected to the DFS owner AP 1110 and is located in the service area of the DFS owner AP 1110 connected to another electronic device. For example, the state in which at least one of the electronic device 101 or the external electronic device 1100 is located in the service area of the DFS owner AP 1110 connected to another electronic device may include at least one of the state in which the electronic device 101 may receive (or detect) the signal (e.g., the beacon signal) of the DFS owner AP 1110 connected to the external electronic device 1100 or the state in which the external electronic device 1100 may receive (or detect) the signal (e.g., the beacon signal) of the DFS owner AP 1110 connected to the electronic device 101. For example, the state in which the designated DFS usage condition is not satisfied may include the state in which at least one of the electronic device 101 or the external electronic device 1100 does not support the DFS, or the state in which the electronic device 101 and the external electronic device 1100 are not connected to the DFS owner AP 1110 or are not located in the service area of the DFS owner AP 1110 connected to another electronic device. For example, the state in which the electronic device 101 and the external electronic device 1100 are not located in the service area of the DFS owner AP 1110 connected to another electronic device may include the state in which the electronic device 101 may not receive (or detect) the signal (e.g., the beacon signal) of the DFS owner AP 1110 connected to the external electronic device 1100 and the state in which the external electronic device 1100 may not receive (or detect) the signal (e.g., the beacon signal) of the DFS owner AP 1110 connected to the electronic device 101.

For example, when the electronic device 101 determines that the designated DFS usage condition is satisfied, the electronic device 101 may set the group owner based on the information relating to the DFS function of the electronic device 101 and the information relating to the DFS function of the external electronic device 1100. For example, when the electronic device 101 that has requested the direct communication connection via the wireless LAN communication is connected to the DFS owner AP 1110 and the external electronic device 1100 is located in the service area of the DFS owner AP 1110 connected to the electronic device 101, the processor 200 may set the electronic device 101 as the group owner of the direct communication via the wireless LAN communication. For example, when the external electronic device 1100 is connected to the DFS owner AP 1110, the electronic device 101 is not connected to the DFS owner AP 1110, and the electronic device 101 is located in the service area of the DFS owner AP 1110 connected to the external electronic device 1100, the electronic device 101 may set the external electronic device 1100 as the group owner for the direct communication via the wireless LAN communication.

According to an embodiment, the electronic device 101 may optionally update the group owner intent of the electronic device 101 based on the group owner setup information (e.g., operation 1117). For example, when the electronic device 101 is set as the group owner and the group owner intent of the electronic device 101 is smaller than the group owner intent of the external electronic device 1100, the electronic device 101 may update the group owner intent of the electronic device 101 to be greater than the group owner intent of the external electronic device 1100. For example, when the electronic device 101 is set as the group owner and the group owner intent of the electronic device 101 is greater than the group owner intent of the external electronic device 1100, the electronic device 101 may maintain the group owner intent of the electronic device 101.

For example, when the external electronic device 1100 is set as the group owner and the group owner intent of the electronic device 101 is greater than the group owner intent of the external electronic device 1100, the electronic device 101 may update the group owner intent of the electronic device 101 to be smaller than the group owner intent of the external electronic device 1100. For example, when the external electronic device 1100 is set as the group owner and the group owner intent of the electronic device 101 is smaller than the group owner intent of the external electronic device 1100, the electronic device 101 may maintain the group owner intent of the electronic device 101.

According to an embodiment, the electronic device 101 may transmit the group owner negotiation request message including the optionally updated group owner intent of the electronic device 101 to the external electronic device 1100 (e.g., operation 1119).

According to an embodiment, the external electronic device 1100 may transmit the group owner negotiation response message corresponding to the group owner negotiation request message to the electronic device 101 (e.g., operation 1121). For example, the group owner negotiation response message may include the group owner intent of the external electronic device 1100.

According to an embodiment, when receiving the group owner negotiation response message corresponding to the group owner negotiation request message from the external electronic device 1100, the electronic device 101 may identify the group owner intent of the external electronic device 1100 from the group owner negotiation response message. The electronic device 101 may set the group owner of the direct communication via the wireless LAN communication by using the optionally updated group owner intent of the electronic device 101 and the group owner intent of the external electronic device 1100 according to the designated second group owner setup method. For example, when the optionally updated group owner intent of the electronic device 101 is greater than the group owner intent of the external electronic device 1100, the electronic device 101 may be set (or selected) as the electronic device 101 for performing the direct communication via the wireless LAN communication.

For example, when the optionally updated group owner intent of the electronic device 101 is smaller than the group owner intent of the external electronic device 1100, the electronic device 101 may be configured (or selected) as the external electronic device 1100 for performing the direct communication via the wireless LAN communication.

.According to an embodiment, the electronic device 101 may transmit the group owner setup completion message including the group owner setup information to the external electronic device 1100 (e.g., operation 1123).

According to an embodiment, when the electronic device 101 is set as the group owner, the electronic device 101 may perform the direct communication connection via the wireless LAN communication with the external electronic device 1100. For example, when the electronic device 101 performs the wireless LAN communication using the DFS owner AP 1110 and the DFS channel, the electronic device 101 may set the DFS channel as the channel for the direct communication via the wireless LAN communication with the external electronic device 1100. The electronic device 101 may perform the direct communication connection via the wireless LAN communication with the external electronic device 1100 based on the channel (e.g., the DFS channel) for the direct communication via the wireless LAN communication with the external electronic device 1100.

According to an embodiment, when setting the external electronic device 1100 as the group owner while the designated DFS usage condition is satisfied, the electronic device 101 may perform the direct communication connection via the wireless LAN communication with the external electronic device 1100 based on the channel (e.g., DFS channel) allocated by the external electronic device 1100 set as the group owner.

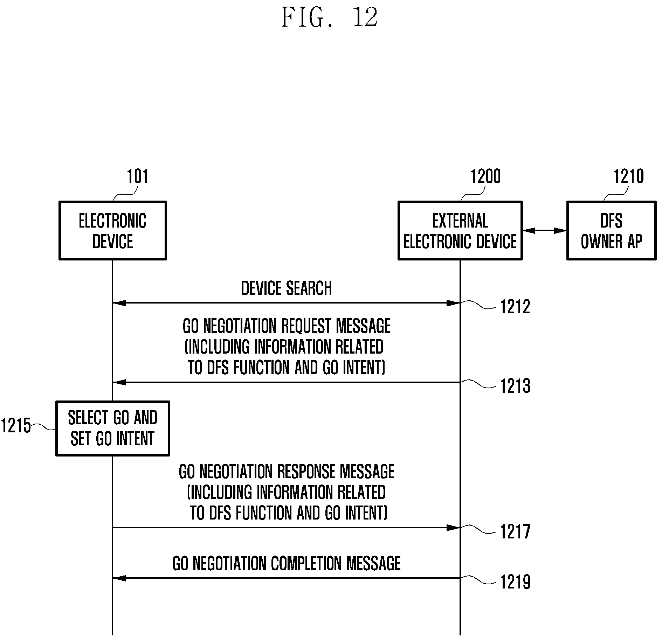

FIG. 12 is an example for setting the group owner based on the group owner intent in the electronic device according to an embodiment.

According to an embodiment referring to FIG. 12, an external electronic device 1200 may detect the electronic device 101 for the direct communication via the wireless LAN communication through the device search (e.g., operation 1211). For example, the external electronic device 1200 may transmit the search request message when the event relating to the direct communication via the wireless LAN communication is detected. For example, the event relating to the direct communication via the wireless LAN communication may be detected based on at least one of the execution of the application or function relating to the direct communication via the wireless LAN communication, the reception of the user input (e.g., the touch input or the gesture input) relating to the direct communication via the wireless LAN communication, or the reception of the control signal relating to the direct communication via the wireless LAN communication. For example, the search request message may include the probe request message or the service discovery frame (SDF) that is related to the search request.

For example, when receiving the search request message via the wireless LAN communication, the electronic device 101 may transmit the search response message corresponding to the search request message. For example, the search response message may include the probe response message or the SDF relating to the search response. For example, the search response message is the information relating to the DFS (dynamic frequency selection) function of the electronic device 101, and may include at least one of the support information (or information on whether the DFS function is supported) for the DFS of the electronic device 101, or the information relating to the DFS owner AP 1210 connected to the electronic device 101.

According to an embodiment, the external electronic device 1200 may transmit the group owner negotiation request message to the electronic device 101 based on the detection of the electronic device 101 through the device search (e.g., operation 1213). For example, the group owner negotiation request message may include the group owner intent of the external electronic device 1200 and the information relating to the DFS function of the external electronic device 1200. For example, the information relating to the DFS function of the external electronic device 1200 may include at least one of support information (or information on whether the DFS function is supported) of a DFS of the external electronic device 1200, information relating to a DFS owner AP 1210 connected to the external electronic device 1200, or the information indicating that the external electronic device 1200 is located in the service area of the DFS owner AP 1210 connected to the electronic device 101. For example, when the external electronic device 1200 accesses (or is connected to) the DFS owner AP 1210, the information relating to the DFS owner AP 1210 connected to the external electronic device 1200 may include at least one of identification information (e.g., SSID or BSSID) for the DFS owner AP 1210 which the external electronic device 1200 accesses (or is connected to) or channel information for the wireless LAN communication with the DFS owner AP 1210. For example, the information indicating that the external electronic device 1200 is located in the service area of the DFS owner AP 1210 connected to the electronic device 101 may include the state in which the external electronic device 1200 may receive (or detect) the signal (e.g., the beacon signal) of the DFS owner AP 1210 connected to the electronic device 101. For example, the external electronic device 1200 may or may not be connected to the DFS owner AP 1210 within the service area of the DFS owner AP 1210 connected to the electronic device 101.

According to an embodiment, when receiving the group owner negotiation request message (e.g., operation 1213), the electronic device 101 may set the group owner of the direct communication via the wireless LAN communication based on the information relating to the DFS function of the electronic device 101 and the information relating to the DFS function of the external electronic device 1200 (e.g., operation 1215). For example, the electronic device 101 may identify whether the designated DFS usage condition is satisfied based on the information relating to the DFS function of the electronic device 101 and the information relating to the DFS function of the external electronic device 1200. For example, the state in which the designated DFS usage condition is satisfied may include the state in which the electronic device 101 and the external electronic device 1200 support the DFS, and at least one of the electronic device 101 or the external electronic device 1200 is connected to the DFS owner AP 1210 and is located in the service area of the DFS owner AP 1210 connected to another electronic device. For example, the state in which at least one of the electronic device 101 or the external electronic device 1200 is located in the service area of the DFS owner AP 1210 connected to another electronic device may include at least one of a state in which the electronic device 101 is located in the service area of the DFS owner AP 1210 connected to the external electronic device 1200 or a state in which the external electronic device 1200 is located in the service area of the DFS owner AP 1210 connected to the electronic device 101. For example, the state in which the designated DFS usage condition is not satisfied may include the state in which at least one of the electronic device 101 or the external electronic device 1200 does not support the DFS, or the state in which the electronic device 101 and the external electronic device 1200 are not connected to the DFS owner AP 1210 or are not located in the service area of the DFS owner AP 1210 connected to another electronic device. For example, the state in which the electronic device 101 and the external electronic device 1200 are not located in the service area of the DFS owner AP 1210 connected to another electronic device may include a state in which the electronic device 101 is not located in the service area of the DFS owner AP 1210 connected to the external electronic device 1200 or a state in which the external electronic device 1200 is not located in the service area of the DFS owner AP 1210 connected to the electronic device 101.

For example, when the electronic device 101 determines that the designated DFS usage condition is satisfied, the electronic device 101 may set the group owner based on the information relating to the DFS function of the electronic device 101 and the information relating to the DFS function of the external electronic device 1200. For example, when the electronic device 101 that has requested the direct communication connection via the wireless LAN communication is connected to the DFS owner AP 1210 and the external electronic device 1200 is located in the service area of the DFS owner AP 1210 connected to the electronic device 101, the processor 200 may set the electronic device 101 as the group owner of the direct communication via the wireless LAN communication. For example, when the external electronic device 1200 is connected to the DFS owner AP 1210, the electronic device 101 is not connected to the DFS owner AP 1210, and the electronic device 101 is located in the service area of the DFS owner AP 1210 connected to the external electronic device 1200, the electronic device 101 may set the external electronic device 1200 as the group owner for the direct communication via the wireless LAN communication.

According to an embodiment, the electronic device 101 may optionally update the group owner intent of the electronic device 101 based on the group owner setup information (e.g., operation 1215). For example, when the electronic device 101 is set as the group owner and the group owner intent of the electronic device 101 is smaller than the group owner intent of the external electronic device 1200, the electronic device 101 may update the group owner intent of the electronic device 101 to be greater than the group owner intent of the external electronic device 1200. For example, when the electronic device 101 is set as the group owner and the group owner intent of the electronic device 101 is greater than the group owner intent of the external electronic device 1200, the electronic device 101 may maintain the group owner intent of the electronic device 101.

For example, when the external electronic device 1200 is set as the group owner and the group owner intent of the electronic device 101 is greater than the group owner intent of the external electronic device 1200, the electronic device 101 may update the group owner intent of the electronic device 101 to be smaller than the group owner intent of the external electronic device 1200. For example, when the external electronic device 1200 is set as the group owner and the group owner intent of the electronic device 101 is smaller than the group owner intent of the external electronic device 1200, the electronic device 101 may maintain the group owner intent of the electronic device 101.

According to an embodiment, the electronic device 101 may transmit the group owner negotiation response message including the optionally updated group owner intent of the electronic device 101 to the external electronic device 1200 (e.g., operation 1217).

According to an embodiment, when receiving the group owner negotiation response message, the external electronic device 1200 may identify the group owner intent (or optionally updated group owner intent) of the electronic device 101 from the group owner negotiation response message. The external electronic device 1200 may set the group owner of the direct communication via the wireless LAN communication by using the optionally updated group owner intent of the electronic device 101 and the group owner intent of the external electronic device 1200 according to the designated second group owner setup method. For example, when the optionally updated group owner intent of the electronic device 101 is greater than the group owner intent of the external electronic device 1200, the external electronic device 1200 may be configured (or selected) as the electronic device 101 for performing direct communication via the wireless LAN communication.

.For example, when the optionally updated group owner intent of the electronic device 101 is smaller than the group owner intent of the external electronic device 1200, the external electronic device 1200 may be set (or selected) as the external electronic device 1200 for performing the direct communication via the wireless LAN communication.

.According to an embodiment, the external electronic device 1200 may transmit the group owner setup completion message including the group owner setup information to the electronic device 101 (e.g., operation 1219).

According to an embodiment, when the electronic device 101 is set as the group owner, the electronic device 101 may perform the direct communication connection via the wireless LAN communication with the external electronic device 1200. For example, when the electronic device 101 performs the wireless LAN communication using the DFS owner AP 1210 and the DFS channel, the electronic device 101 may set the DFS channel as the channel for the direct communication via the wireless LAN communication with the external electronic device 1200. The electronic device 101 may perform the direct communication connection via the wireless LAN communication with the external electronic device 1200 based on the channel (e.g., the DFS channel) for the direct communication via the wireless LAN communication with the external electronic device 1200.

According to an embodiment, when setting the external electronic device 1200 as the group owner while the designated DFS usage condition is satisfied, the electronic device 101 may perform the direct communication connection via the wireless LAN communication with the external electronic device 1200 based on the channel (e.g., DFS channel) allocated by the external electronic device 1200 set as the group owner.

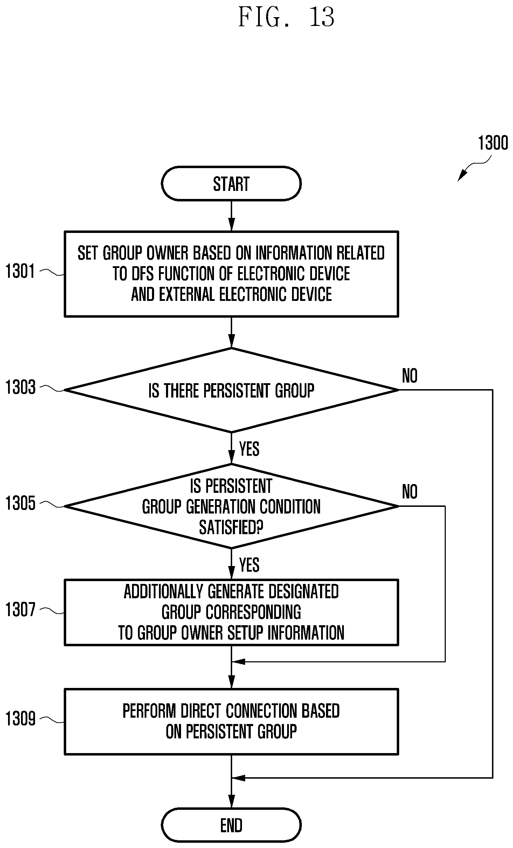

FIG. 13 is a flowchart for generating the persistent group based on the information relating to the DFS function in the electronic device according to an embodiment. In the following embodiments, each operation may be performed sequentially, but is not necessarily performed sequentially. For example, the order of each operation may be changed, and at least two operations may also be performed in parallel. For example, the electronic device of FIG. 13 may be the electronic device 101 of FIG. 1 or 2.

According to an embodiment referring to FIG. 13, in operation 1301, the electronic device (e.g., the electronic device 101 of FIG. 1 or 2) or the processor (e.g., the processor 120 of FIG. 1 or the processor 200 of FIG. 2) may detect the external electronic device for the direct communication via the wireless LAN communication through the device search. For example, the processor 200 may transmit the search request message when the event relating to the direct communication via the wireless LAN communication is detected. For example, the event relating to the direct communication via the wireless LAN communication may be detected based on at least one of the execution of the application or function relating to the direct communication via the wireless LAN communication, the reception of the user input (e.g., the touch input or the gesture input) relating to the direct communication via the wireless LAN communication, or the reception of the control signal relating to the direct communication via the wireless LAN communication. For example, the search request message is the information relating to the DFS (dynamic frequency selection) function of the electronic device 101, and may include at least one of the support information (or information on whether the DFS function is supported) for the DFS of the electronic device 101, or the information relating to the DFS owner AP connected to the electronic device 101. For example, the search request message may include the probe request message, the service discovery frame (SDF), or the message of the OOB communication that is relating to the search request.

For example, the processor 200 may receive the search response message corresponding to the search request message from the external electronic device. For example, the search response message may include the probe response message, the SDF, or the message of the OOB communication relating to the search response. For example, the search response message is the information relating to the DFS function of the external electronic device, and may include at least one of the support information (or information on whether the DFS function is supported) for the DFS of the external electronic device, the information relating to the DFS owner AP connected to the external electronic device, or the information indicating that the external electronic device is located in the service area of the DFS owner AP connected to the electronic device 101.

According to an embodiment, in operation 1303, the electronic device (e.g., the electronic device 101) or the processor (e.g., the processor 120 or 200) may identify whether there is the persistent group relating to the external electronic device. For example, the processor 200 may identify whether the information relating to the persistent group corresponding to the identification information of the external electronic device exists in the memory 220. For example, the persistent group may include devices (e.g., devices designated with Wi-Fi protected setup (WPS)) that store group owner information and encrypted information required for connection with the group owner to reduce connection delay of the direct communication via the wireless LAN communication between the electronic device 101 and the external electronic device.

According to an embodiment, when there is the persistent group relating to the external electronic device (e.g., 'Yes' in operation 1303), in operation 1305, the electronic device (e.g., the electronic device 101) or the processor (e.g., the processor 120 or 200) may idetify whether the persistent group generation condition is satisfied based on the information relating to the DFS function of the electronic device 101 and the information relating to the DFS function of the external electronic device. For example, when there is the persistent group relating to the external electronic device, the processor 200 may identify whether the designated DFS usage condition is satisfied based on the information relating to the DFS function of the electronic device 101 and the information relating to the DFS function of the external electronic device. For example, the state in which the designated DFS usage condition is satisfied may include the state in which the electronic device 101 and the external electronic device support the DFS, and at least one of the electronic device 101 or the external electronic device is connected to the DFS owner AP and is located in the service area of the DFS owner AP connected to another electronic device. For example, the state in which the designated DFS usage condition is not satisfied may include the state in which at least one of the electronic device 101 or the external electronic device does not support the DFS, or the state in which the electronic device 101 and the external electronic device are not connected to the DFS owner AP or are not located in the service area of the DFS owner AP connected to another electronic device.

For example, when determining that there is the persistent group relating to the external electronic device and the designated DFS usage condition is not satisfied, the processor 200 may determine that the persistent generation condition is not satisfied.

For example, when determining that the designated DFS usage condition is satisfied, the processor 200 may set the group owner based on the information relating to the DFS function of the electronic device 101 and the information relating to the DFS function of the external electronic device. For example, when the electronic device 101 that has requested the direct communication connection via the wireless LAN communication is connected to the DFS owner AP and the external electronic device is located in the service area of the DFS owner AP connected to the electronic device 101, the processor 200 may set the electronic device 101 as the group owner regardless of whether the external electronic device is connected to the DFS owner AP. For example, the processor 200 may set the external electronic device as the group owner when the external electronic device is connected to the DFS owner AP, the electronic device 101 is not connected to the DFS owner AP, and the electronic device 101 is located in the service area of the DFS owner AP connected to the external electronic device.

For example, when there is the persistent group corresponding to the set group owner based on the information relating to the DFS function of the electronic device 101 and the information relating to the DFS function of the external electronic device, the processor 200 may determine that the persistent group generation condition is not satisfied.

For example, when there is no persistent group corresponding to the set group owner based on the information relating to the DFS function of the electronic device 101 and the information relating to the DFS function of the external electronic device, the processor 200 may determine that the persistent group generation condition is satisfied.

According to an embodiment, when determining that the persistent group generation condition is not satisfied (e.g., 'No' in operation 1305), in operation 1309, the electronic device (e.g., the electronic device 101) or the processor (e.g., the processor 120 or 200) may perform the direct communication connection via the wireless LAN communication with the external electronic device based on the persistent group corresponding to the external electronic device. For example, when there are multiple persistent groups corresponding to the external electronic device, the processor 200 may control the communication circuitry 210 to perform the direct communication connection via the wireless LAN communication with the external electronic device based on the persistent group corresponding to the set group owner based on the information relating to the DFS function of the electronic device 101 and the information relating to the DFS function of the external electronic device.

According to an embodiment, when determining that the persistent group generation condition is satisfied (e.g., 'Yes' in operation 1305), in operation 1307, the electronic device (e.g., the electronic device 101) or the processor (e.g., the processor 120 or 200) may newly generate the persistent group corresponding to the set group owner based on the information relating to the DFS function of the electronic device 101 and the information relating to the DFS function of the external electronic device. For example, the processor 200 may newly generat the persistent group using the designated first group owner setup method or the designated second group owner setup method.

According to an embodiment, in operation 1309, the electronic device (e.g., the electronic device 101) or the processor (e.g., the processor 120 or 200) may perform the direct communication connection via the wireless LAN communication with the external electronic device based on the newly generated persistent group corresponding to the external electronic device.

According to an embodiment, when there is no persistent group relating to the external electronic device (e.g., 'NO' in operation 1303), the electronic device (e.g., the electronic device 101) or the processor (e.g., the processor 120 or 200) may terminate an embodiment for generating the persistent group. For example, when there is no persistent group relating to the external electronic device, the processor 200 may set the group owner using the designated first group owner setup method (e.g., FIG. 3) or the designated second group owner setup method (e.g., FIG. 8) based on the information relating to the DFS function of the electronic device 101 and the information relating to the DFS function of the external electronic device.

According to an embodiment, the operating method of the electronic device (e.g., the electronic device 101 of FIG. 1 or 2) may include an operation of transmitting the search request message. According to an embodiment, the operating method of an electronic device may include an operation of receiving a response message from an external electronic device. According to an embodiment, the operating method of an electronic device may include an operation of identifying the first information relating to the DFS function of the external electronic device from the response message. According to an embodiment, the operating method of an electronic device may include, when the first information relating to the DFS function of the external electronic device includes information indicating that the external electronic device is connected to a DFS owner AP, an operation of transmitting, to the external electronic device, a message including information to cause the external electronic device to operate as a group owner for controlling a direct connection via a wireless LAN between the electronic device and the external electronic device.

According to an embodiment, the operating method of an electronic device may include an operation of transmitting the search request message including the second information relating to the DFS function of the electronic device. According to an embodiment, the second information relating to the DFS function of the electronic device may include at least one of the support information for the DFS function of the electronic device or the information relating to the DFS owner AP connected to the electronic device.

According to an embodiment, the first the information relating to the DFS function of the external electronic device may include at least one of the support information for the DFS function of the external electronic device, the information relating to the DFS owner AP connected to the external electronic device, or the information indicating that the external electronic device is located in the service area of the DFS owner AP connected to the electronic device.

According to an embodiment, when determining that the electronic device is connected to the DFS owner AP and the external electronic device is located in the service area of the DFS owner AP based on the second information relating to the DFS function of the electronic device and the first the information relating to the DFS function of the external electronic device, the operating method of the electronic device may include an operation of selecting the electronic device as the group owner for controlling the direct connection via the wireless LAN.

According to an embodiment, the operating method of an electronic device may include an operation of setting the operation channel for the direct connection via the wireless LAN with the external electronic device based on the electronic device selected as the group owner for controlling the direct connection via the wireless LAN. According to an embodiment, the operating method of an electronic device may include an operation of performing the direct connection via the wireless LAN with the external electronic device through the operation channel. According to an embodiment, the operation channel of the direct connection via the wireless LAN may be set as the DFS channel by the electronic device.

According to an embodiment, when determining that the external electronic device is connected to the DFS owner AP and the electronic device is located in the service area of the DFS owner AP based on the second information relating to the DFS function of the electronic device and the first the information relating to the DFS function of the external electronic device, the operating method of an electronic device may include an operation of selecting the external electronic device as the group owner for controlling the direct connection via the wireless LAN.

According to an embodiment, the operation of transmitting to the external electronic device may include an operation of transmitting, to the external electronic device, a message including the information indicating that the electronic device is located in the service area of the DFS owner AP connected to the external electronic device based on the external electronic device selected as the group owner for controlling the direct connection via the wireless LAN and the information relating to a device for controlling the direct connection via the wireless LAN. According to an embodiment, the operation channel of the direct connection via the wireless LAN with the external electronic device may be set as the DFS channel by the external electronic device.

According to an embodiment, the operation method of an electronic device may include an operation of identifying the group owner for controlling the direct connection via the wireless LAN set in the persistent group when the persistent group relating to the external electronic device is set. According to an embodiment, the operation method of an electronic device may include an operation of additionally generating the persistent group corresponding to the group owner for controlling the direct connection through the selected wireless LAN when the group owner for controlling the direct connection through the selected wireless LAN and the group owner for controlling the direct connection via the wireless LAN set in the persistent group are different.

According to an embodiment, the operating method of an electronic device may include an operation of selecting the group owner for controlling the direct connection via the wireless LAN based on the persistent group when the group owner for controlling the direct connection via the selected wireless LAN and the group owner for controlling the direct connection via the wireless LAN set in the persistent group are the same.

According to an embodiment, a non-transitory computer-readable storage medium (or a computer program product) storing one or more programs may be described. According to an embodiment, one or more programs may include instructions that, when executed by at least one processor of an electronic device (e.g., the electronic device 101 of FIG. 1 or 2), cause the electronic device to perform the following operations: transmitting the search request message, receiving the response message from the external electronic device, identifying the first information relating to the DFS function of the external electronic device from the response message, and, when the first the information relating to the DFS function of the external electronic device includes the information indicating that the external electronic device is connected to the DFS owner AP, transmitting, to the external electronic device, the message including the information causing the external electronic device to operate as the group owner for controlling the direct connection between the electronic device and the external electronic device via the wireless LAN.

The embodiments of the present disclosure disclosed in this specification and drawings present merely specific examples to easily describe the technical contents according to the embodiments of the present disclosure and to help understand the embodiments of the present disclosure, and are not intended to limit the scope of the embodiments of the present disclosure. Therefore, the scope of an embodiment of the present disclosure should be interpreted to include all changes or modified forms derived based on the technical idea of an embodiment of the present disclosure, in addition to the embodiments disclosed herein.

## Claims

1. An electronic device (101) comprising:
communication circuitry (210);
at least one processor (200) comprising processing circuitry; and
memory (220) storing instructions,
wherein the instructions, when executed by the at least one processor (200) individually or collectively, cause the electronic device (101) to:
transmit a search request message;
receive a response message from an external electronic device;
identify first information relating to a dynamic frequency selection (DFS) function of an external electronic device based on the response message; and
in case the first information indicates that the external electronic device is connected to a DFS owner AP, transmit, to the external electronic device, a message including information to cause the external electronic device to operate as a group owner for controlling direct connection via a wireless LAN between the electronic device (101) and the external electronic device.

2. The electronic device (101) of claim 1, wherein the instructions, when executed by the at least one processor (200) individually or collectively, cause the electronic device (101) to transmit the search request message comprising second information relating to a DFS function of the electronic device (101),
wherein the second information relating to the DFS function of the electronic device (101) includes at least one of support information of the DFS function of the electronic device (101) or information relating to a DFS owner AP to which the electronic device (101) is connected.

3. The electronic device (101) of claim 1 or 2, wherein the instructions, when executed by the at least one processor (200) individually or collectively, cause the electronic device (101) to select the electronic device (101) as the group owner for controlling direct connection via the wireless LAN in case of determining that the electronic device (101) is connected to a DFS owner AP, and that the external electronic device is located in a service area of the DFS owner AP, based on second information relating to the DFS function of the electronic device (101) and the first information relating to the DFS function of the external electronic device.

4. The electronic device (101) of claim 3, wherein the instructions, when executed by the at least one processor (200) individually or collectively, cause the electronic device (101) to:
set an operation channel of direct connection with the external electronic device via the wireless LAN based on the electronic device (101) selected as the group owner for controlling direct connection via the wireless LAN; and
perform direct connection with the external electronic device via the wireless LAN through the operation channel, and
wherein the operation channel of direct connection via the wireless LAN is set as a DFS channel by the electronic device (101).

5. The electronic device (101) of claim 1 or 2, wherein the instructions, when executed by the at least one processor (200) individually or collectively, cause the electronic device (101) to select the external electronic device as the group owner for controlling direct connection via the wireless LAN in case of determining that the external electronic device is connected to a DFS owner AP, and that the electronic device (101) is located in a service area of the DFS owner AP, based on second information relating to the DFS function of the electronic device (101) and the first information relating to the DFS function of the external electronic device.

6. The electronic device (101) of claim 5, wherein the instructions, when executed by the at least one processor (200) individually or collectively, cause the electronic device (101) to, based on the external electronic device being selected as the group owner for controlling direct connection via the wireless LAN, transmit, to the external electronic device, the message including information indicating that the electronic device (101) is located in a service area of the DFS owner AP to which the external electronic device is connected, and information relating to the group owner for controlling direct connection via the wireless LAN, and
wherein an operation channel of direct connection via the wireless LAN is set as a DFS channel by the external electronic device.

7. The electronic device (101) of any one of claims 1 to 6, wherein the instructions, when executed by the at least one processor (200) individually or collectively, cause the electronic device (101) to:
in case that a persistent group relating to the external electronic device is set, identify the group owner for controlling direct connection via a wireless LAN set in the persistent group; and
in case that the selected group owner for controlling direct connection via a wireless LAN and the identified group owner for controlling direct connection via a wireless LAN set in the persistent group are different, additionally generate a persistent group corresponding to the selected group owner for controlling direct connection via a wireless LAN.

8. The electronic device (101) of claim 7, wherein the instructions, when executed by the at least one processor (200) individually or collectively, cause the electronic device (101) to, in case that the selected group owner for controlling direct connection via a wireless LAN and the identified group owner for controlling direct connection via a wireless LAN set in the persistent group are identical, select the group owner for controlling direct connection via a wireless LAN, based on the persistent group.

9. An operation method of an electronic device (101), comprising:
transmitting a search request message;
receiving a response message from an external electronic device;
identifying first information relating to a dynamic frequency selection, DFS, function of the external electronic device from the response message; and
when the first information relating to the DFS function of the external electronic device includes information indicating that the external electronic device is connected to a DFS owner access point, AP, transmitting, to the external electronic device, a message including information to cause the external electronic device to operate as a group owner for controlling a direct connection via a wireless LAN between the electronic device (101) and the external electronic device.

10. The operation method of claim 9, wherein the transmitting of the search request message includes transmitting the search request message including second information relating to the DFS function of the electronic device (101), and
the second information relating to the DFS function of the electronic device (101) includes at least one of support information for the DFS function of the electronic device (101) or information relating to a DFS owner AP to which the electronic device (101) is connected.

11. The operation method of claim 9 or 10, further comprising:
when it is determined that the electronic device (101) is connected to the DFS owner AP and the external electronic device is located in a service area of the DFS owner AP based on the second information relating to the DFS function of the electronic device (101) and the first information relating to the DFS function of the external electronic device, selecting the electronic device (101) as the group owner for controlling the direct connection via the wireless LAN.

12. The operation method of claim 11, further comprising:
setting an operation channel for the direct connection with the external electronic device via the wireless LAN based on the electronic device (101) selected as the group owner for controlling the direct connection via the wireless LAN; and
performing the direct connection with the external electronic device via the wireless LAN through the operation channel,
wherein the operation channel of the direct connection via the wireless LAN is set as a DFS channel by the electronic device (101).

13. The operation method of claim 9 or 10, further comprising:
when it is determined that the external electronic device is connected to the DFS owner AP and the electronic device (101) is located in a service area of the DFS owner AP based on the second information relating to the DFS function of the electronic device (101) and the first information relating to the DFS function of the external electronic device, selecting the external electronic device as the group owner for controlling the direct connection via the wireless LAN.

14. The operation method of claim 13, wherein the transmitting of the search request message to the external electronic device includes transmitting, to the external electronic device, the message including the information indicating that the electronic device (101) is located in the service area of the DFS owner AP to which the external electronic device is connected and the information relating to the group owner for controlling the direct connection via the wireless LAN based on the external electronic device selected as the group owner for controlling the direct connection via the wireless LAN, and
an operation channel of the direct connection via the wireless LAN is set as a DFS channel by the external electronic device.

15. The operation method of any one of claims 9 to 14, further comprising:
when a persistent group relating to the external electronic device is set, identifying the group owner for controlling the direct connection via the wireless LAN set in the persistent group, and
when the selected group owner for controlling the direct connection via the wireless LAN and the identified group owner for controlling the direct connection via the wireless LAN set in the persistent group are different, additionally generating a persistent group corresponding to the selected group owner for controlling the direct connection via the wireless LAN.
